# EUROPEAN PATENT APPLICATION

(11) **EP 2 436 969 A2**
(43) Date of publication of application: **04.04.2012**
(21) Application number: 11183018.8
(22) Date of filing: 28.09.2011
(51) Int. Cl.: F21S 8/12, F21V 7/00, F21V 14/08

(54) **Vehicle headlamp**

(30) Priority: 29.09.2010 JP 2010219695; 08.10.2010 JP 2010228814
(71) Applicant: Koito Manufacturing Co., Ltd., Tokyo 108-8711 (JP)
(72) Inventor: Mochizuki, Mitsuyuki, Shimizu-shi, Shizuoka (JP)
(74) Representative: Grünecker, Kinkeldey, Stockmair & Schwanhäusser

(57) **Abstract**

There is provided a vehicle lamp (10) configured to emit a variable light distribution pattern (PA0, PA1...) for a high beam. The vehicle lamp includes: a lamp unit (20) configured to form the variable light distribution pattern, the lamp unit including: a projection lens (22) disposed on an optical axis (Ax); a pair of light sources (24La, 24Ra) configured to emit light, wherein one of the light sources is a left-side light source (24La) which is disposed on a left side of the optical axis, and the other light source is a right-side light source (24Ra) which is disposed on a right side of the optical axis; a pair of reflectors (26L, 26R) arranged on both sides of the optical axis to reflect light emitted from the light sources toward the projection lens; a movable shade (28) disposed between the reflectors and the projection lens; and an actuator (30) configured to move the movable shade between a first position and a second position, wherein: the light forming a given region of the variable light distribution pattern is blocked by the movable shade when the movable shade is in the first position; and the light reflected from the reflectors is not blocked when the movable shade is in the second position; a detector (52) configured to detect an object in front of the vehicle; a drive controller (50) configured to control the actuator when the detector detects the object in front of the vehicle while the vehicle is running; a light amount controller (50) configured to control an amount of the light emitted from the light sources.

## Description

### BACKGROUND OF THE INVENTION

### 1. TECHNICAL FIELD

Embodiments described herein relate to a vehicle lamp that emits a variable light distribution pattern for a high beam.

### 2. RELATED ART

In the related art, a vehicle lamp is known, which is configured to emit a variable light distribution pattern so as to be able to change a shape of a light distribution pattern such as a high beam light distribution pattern or an additional light distribution pattern that is added to a low beam light distribution pattern when a high beam light distribution pattern is emitted.

For example, JP-A-2010-140661 discloses a vehicle lamp configured to emit an additional light distribution pattern by a combination of a pair of light distribution patterns formed by light emitted from a pair of lamp units, and to swivel each lamp unit, thereby providing the additional light distribution pattern as a variable light distribution pattern.

JP-A-2010-140661 describes a variable light distribution pattern in which a given region around its center does not exist. Furthermore, the position of the given region is moved laterally (hereinafter, "laterally" means a vehicle width direction) in accordance with that of a preceding vehicle or an oncoming vehicle, thereby making it possible to improve forward visibility for a driver of a vehicle, equipped with this vehicle lamp, without giving glare to a driver of the preceding vehicle or oncoming vehicle.

Instead of such a structure, a projector type lamp unit may be provided with a movable shade on an optical path between a reflector and a projection lens of the lamp unit, and this movable shade may be moved laterally between a light blocking position where light for forming a given region around a center of a variable light distribution pattern, included in light reflected from the reflector, is blocked, and a light release position where the blocking of light is released. In that case, even when the lamp unit is solely used, it is possible to improve forward visibility for a driver of a vehicle, equipped with this lamp unit, without giving glare to a driver of a preceding vehicle or an oncoming vehicle, and it is also possible to eliminate the necessity for swiveling of the lamp unit.

However, in such a case, when the movable shade is moved from the light blocking release position to the light blocking position, a dark region moving from a lateral end portion of a variable light distribution pattern toward a center portion thereof is formed, thus causing a problem that an uncomfortable feeling might be given to the driver of the vehicle equipped with this lamp unit.

### SUMMARY OF THE INVENTION

An object of an exemplary embodiment of the present invention is to provide a vehicle lamp configured to emit a variable light distribution pattern for a high beam and which is capable of forming, with a simple lamp structure, a variable light distribution pattern which can improve forward visibility for a driver of a vehicle without giving glare to a driver of a preceding vehicle or an oncoming vehicle. Also, according to this vehicle lamp, it is possible to prevent an uncomfortable feeling from being given to the driver of the vehicle.

According to one or more illustrative aspects of the present invention, there is provided a vehicle lamp (10) configured to emit a variable light distribution pattern (PAO, PA1...) for a high beam, the vehicle lamp comprising: a lamp unit (20) configured to form the variable light distribution pattern, the lamp unit comprising: a projection lens (22) disposed on an optical axis (Ax) extending in a longitudinal direction of a vehicle; a pair of light sources (24La, 24Ra) configured to emit light, wherein the light sources are disposed behind a rear focal point of the projection lens and wherein one of the light sources is a left-side light source (24La) which is disposed on a left side of the optical axis, and the other light source is a right-side light source (24Ra) which is disposed on a right side of the optical axis; a pair of reflectors (26L, 26R) arranged on both sides of the optical axis to reflect light emitted from the light sources toward the projection lens; a movable shade (28) disposed between the reflectors and the projection lens; and an actuator (30) configured to move the movable shade between a first position and a second position, wherein: the light forming a given region of the variable light distribution pattern is blocked by the movable shade when the movable shade is in the first position; and the light reflected from the reflectors is not blocked when the movable shade is in the second position; a detector (52) configured to detect an object in front of the vehicle; a drive controller (50) configured to control the actuator such that the actuator moves the movable shade between the first and second positions, when the detector detects the object in front of the vehicle while the vehicle is running; a light amount controller (50) configured to control an amount of the light emitted from the light sources, wherein the light amount controller decreases an amount of light emitted from the left-side light source (24La) when the movable shade is moved from the second position, which is on a left side of the optical axis, to the first position, and the light amount controller decreases an amount of light emitted from the right-side light source (24Ra) when the movable shade is moved from the second position, which is on a right side of the optical axis, to the first position.

The foregoing "variable light distribution pattern for a high beam" may be a high beam light distribution pattern itself, and its light distribution pattern shape may be changed. Alternatively, the foregoing "variable light distribution pattern for a high beam" may be an additional light distribution pattern that is added to a low beam light distribution pattern when a high beam light distribution pattern is formed, and its light distribution pattern shape may be changed.

The foregoing "light source" is located behind the rear focal point of the projection lens, but as used herein, the expression "disposed behind the rear focal point" not only means that the light source is located geometrically behind the rear focal point but also means that the light source is located optically behind the rear focal point (i.e., a mirror is located on an optical path and a virtual light source serving as a mirror image thereof is located behind the rear focal point).

The foregoing "movable shade" is laterally movable between a light blocking position (i.e., the first position) and a light blocking release position (i.e., the second position), but the mode of the movement is not particularly limited. For example, linear reciprocating motion, rotation or the like is adoptable as the mode of the movement.

The type of the foregoing "object" is not particularly limited, and for example, might include a preceding vehicle, an oncoming vehicle, a pedestrian, a bicycle, etc..

A specific position of the foregoing "given region" is not particularly limited as long as it is located within a range in which an uncomfortable feeling might be given to a driver of the vehicle, equipped with the vehicle lamp, by a dark region when the dark region moves from a lateral end portion of the variable light distribution pattern toward the "given region".

A specific value for the decreased amount in "decreasing an amount of light emitted from the light source" by the foregoing "light amount controller" is not particularly limited, and the reduction of the amount of light from the light source may also mean extinguishing of the light source.

As described above, in the vehicle lamp according to the invention, a projector type lamp unit including a movable shade is adopted as the lamp unit for forming a variable light distribution pattern for a high beam. Furthermore, the vehicle lamp is formed so that upon detection of a particular object present in front of the vehicle during running of the vehicle, the movable shade is laterally moved from the light blocking release position to the light blocking position at which light for forming a given region near a center of the variable light distribution pattern is blocked, thus making it possible to obtain the following effects.

Specifically, the position of the given region is moved laterally in accordance with that of a preceding vehicle or an oncoming vehicle, thereby making it possible to improve forward visibility for the driver of the vehicle, equipped with the vehicle lamp, without giving glare to a driver of the preceding vehicle or oncoming vehicle. In addition, the present invention is capable of implementing this feature by using the single lamp unit and also capable of implementing this feature without any need for swiveling of the lamp unit.

Additional, the vehicle lamp according to the invention is formed so that the lamp unit is provided with two sets of the light sources and reflectors arranged on both sides of the optical axis; furthermore, the vehicle lamp is provided with the light amount controller for reducing the amount of light from the left side light source when the movable shade is moved from the left side light blocking release position to the light blocking position and for reducing the amount of light from the right side light source when the movable shade is moved from the right side light blocking release position to the light blocking position, thus making it possible to obtain the following effects.

Specifically, the variable light distribution pattern will be formed as a light distribution pattern provided by a combination of a pair of right and left light distribution patterns formed by light emitted from the two light sources and reflected from the two reflectors. However, when the movable shade is moved from the light blocking release position to the light blocking position, dimming control is performed on one of the light sources by the light amount controller, thereby making it possible to effectively suppress formation of a dark region moving from a lateral end portion of the variable light distribution pattern toward a center portion thereof. As a result, the possibility that an uncomfortable feeling might be given to the driver of the vehicle equipped with the vehicle lamp can be eliminated.

As described above, according to the invention, the vehicle lamp configured to emit a variable light distribution pattern for a high beam is capable of forming, with a simple lamp structure, a variable light distribution pattern which can improve forward visibility for the driver of the vehicle, equipped with the vehicle lamp, without giving glare to the driver of the preceding vehicle or oncoming vehicle in such a manner that prevents an uncomfortable feeling from being given to the driver of the vehicle equipped with the vehicle lamp.

In the above-described structure, when the movable shade is moved from the left side light blocking release position to the light blocking position, the light amount controller may increase the amount of light from the right side light source; on the other hand, the light amount controller may increase the amount of light from the left side light source when the movable shade is moved from the right side light blocking release position to the light blocking position. In that case, the following effects are obtainable.

Specifically, in the invention, dimming control is performed on one of the light sources by the light amount controller when the movable shade is moved from the light blocking release position to the light blocking position, and overall brightness of the variable light distribution pattern is thus reduced accordingly. However, during this movement, enhancing control is performed on the other light source, thereby allowing the overall brightness of the variable light distribution pattern to be maintained at a level close to that of a normal variable light distribution pattern. As a result, the possibility that an uncomfortable feeling might be given to the driver of the vehicle equipped with the vehicle lamp can be further eliminated.

According to one or more additional illustrative aspects of the present invention, there is provided A vehicle lamp (10) configured to emit a variable light distribution pattern (PAO, PA1...) for a high beam, the vehicle lamp comprising: first and second lamp units (20S, 20F) configured to form the variable light distribution pattern, each of the first and second lamp units comprising: a projection lens (22) disposed on an optical axis (Ax) extending in a longitudinal direction of a vehicle; a pair of light sources (24La, 24Ra) configured to emit light, wherein the light sources are disposed behind a rear focal point of the projection lens and wherein one of the light sources is a left-side light source (24La) which is disposed on a left side of the optical axis, and the other light source is a right-side light source (24Ra) which is disposed on a right side of the optical axis; a pair of reflectors (26L, 26R) arranged on both sides of the optical axis to reflect light emitted from the light sources toward the projection lens; a movable shade (28) disposed between the reflectors and the projection lens; and an actuator (30) configured to move the movable shade between a first position and a second position, wherein: the light forming a given region of the variable light distribution pattern is blocked by the movable shade when the movable shade is in the first position; and the light reflected from the reflectors is not blocked when the movable shade is in the second position; a detector (52) formed to detect an object in front of the vehicle; a light distribution pattern controller (50) configured to control a light distribution of light emitted from the first and second lamp units, and wherein the second position of the movable shade of the first lamp unit is located on a left side of the optical axis of the first lamp unit, while the second position of the movable shade of the second lamp unit is located on a right side of the optical axis of the second lamp unit, wherein the light distribution pattern controller is configured to control the actuator of each of the first and second lamp units such that the actuator moves the movable shade between the second position and the first position, when the detector detects the object in front of the vehicle while the vehicle is running, and wherein the light distribution pattern controller turns off the left side light source of the first lamp unit when the movable shade of the first lamp unit is moved from the second position to the first position, and the light distribution pattern controller turns off the right side light source of the second lamp unit when the movable shade of the second lamp unit is moved from the second position to the first position.

The vehicle lamp according to the invention forms, a variable light distribution pattern as the whole lamp with a light distribution pattern provided by a combination of a pair of variable light distribution patterns formed by light emitted from the first and second lamp units.

In this case, the variable light distribution pattern formed by light emitted from the first lamp unit is formed as a light distribution pattern provided by a combination of a pair of right and left light distribution patterns formed by light emitted from the two light sources and reflected from the two reflectors. However, when the movable shade is moved rightward from the light blocking release position to the light blocking position, the left light source is extinguished while the movable shade is moved in a section between the light blocking release position and a position near the optical axis, thus preventing the right light distribution pattern from being formed. Hence, in the variable light distribution pattern, formation of a dark region moving leftward from a right end portion thereof can be prevented. As a result, the possibility that an uncomfortable feeling might be given to a driver of the vehicle equipped with the vehicle lamp can be eliminated.

On the other hand, the variable light distribution pattern formed by light emitted from the second lamp unit is formed as a light distribution pattern provided by a combination of a pair of right and left light distribution patterns formed by light emitted from the two light sources and the two reflectors. However, when the movable shade is moved leftward from the light blocking release position to the light blocking position, the right light source is extinguished while the movable shade is moved in a section between the light blocking release position and a position near the optical axis, thus preventing the left light distribution pattern from being formed. Hence, in the variable light distribution pattern, formation of a dark region moving rightward from a left end portion thereof can be prevented. As a result, the possibility that an uncomfortable feeling might be given to the driver of the vehicle equipped with the vehicle lamp can be eliminated.

Moreover, in the invention, when no right light distribution pattern is formed in the variable light distribution pattern formed by light emitted from the first lamp unit, the right light distribution pattern is formed in the variable light distribution pattern formed by light emitted from the second lamp unit. Furthermore, when no left light distribution pattern is formed in the variable light distribution pattern formed by light emitted from the second lamp unit, the left light distribution pattern is formed in the variable light distribution pattern formed by light emitted from the first lamp unit. Hence, the vehicle lamp is capable of forming, as the whole lamp, an entire shape of the variable light distribution pattern even during the movement of the movable shade of each lamp unit.

As described above, according to the invention, the vehicle lamp configured to emit a variable light distribution pattern for a high beam is capable of forming, with a simple lamp structure, a variable light distribution pattern which can improve forward visibility for the driver of the vehicle, equipped with the vehicle lamp, without giving glare to a driver of a preceding vehicle or an oncoming vehicle, for example, without giving an uncomfortable feeling to the driver of the vehicle equipped with the vehicle lamp.

In the above-described structure, when the light blocking position of the movable shade of the lamp unit is located opposite to the light blocking release position thereof with respect to the optical axis in moving the movable shade of the lamp unit from the light blocking release position to the light blocking position, the light distribution pattern controller may also extinguish the other light source of the lamp unit, which has been lit, while the movable shade moves in a section beyond the optical axis. In that case, irrespective of the location at which the light blocking position is set, a moving dark region can be prevented from being formed in the variable light distribution pattern.

In the above-described structure, when the movable shade of the lamp unit is moved from the light blocking release position to the light blocking position, the light distribution pattern controller may increase the amount of light from the light source of one of the lamp units, which is equivalent to the extinguished light source of the other lamp unit. In that case, the following effects are obtainable.

Specifically, while one of the light sources (or both of the light sources) is/are extinguished in the lamp unit, the variable light distribution pattern formed by light emitted from the lamp unit will be reduced in brightness by that of the light distribution pattern on one side (or no variable light distribution pattern will be formed at all). To cope with this, the amount of light from the light source of one of the lamp units, which is equivalent to the extinguished light source of the other lamp unit, is increased, thereby allowing, as the whole lamp, the brightness of the variable light distribution pattern to be maintained at a level close to that of the brightness of a normal variable light distribution pattern. As a result, the possibility that an uncomfortable feeling might be given to the driver of the vehicle equipped with the vehicle lamp can be further eliminated.

### BRIEF DESCRIPTION OF THE DRAWINGS

FIG. 1 is a front view illustrating a vehicle lamp according to one embodiment of the present invention.
FIG. 2 is a cross-sectional view taken along a line II-II of FIG. 1.
FIG. 3 is a cross-sectional view taken along a line III-III of FIG. 2.
FIG. 4A is a diagram illustrating a high beam light distribution pattern formed on a virtual vertical screen at a position 25 m ahead of the lamp by light emitted from the vehicle lamp when a movable shade is located at a light blocking release position.
FIG. 4B is a diagram illustrating a high beam light distribution pattern formed on the virtual vertical screen at a position 25 m ahead of the lamp by light emitted from the vehicle lamp when the movable shade is located at a light blocking position.
FIG. 5A is a diagram illustrating an additional light distribution pattern serving as a variable light distribution pattern constituting part of the high beam light distribution pattern of FIG. 4A.
FIGS. 5B to 5D are diagrams each illustrating an additional light distribution pattern, serving as a variable light distribution pattern constituting part of the high beam light distribution pattern, in the course of transition.
FIG. 5E is a diagram illustrating an additional light distribution pattern serving as a variable light distribution pattern constituting part of the high beam light distribution pattern of FIG. 4B.
FIG. 5F is a diagram illustrating an additional light distribution pattern serving as a variable light distribution pattern constituting part of the high beam light distribution pattern of FIG. 4A.
FIGS. 5G to 5I are diagrams each illustrating an additional light distribution pattern, serving as a variable light distribution pattern constituting part of the high beam light distribution pattern, in the course of transition.
FIG. 5J is a diagram illustrating an additional light distribution pattern serving as a variable light distribution pattern constituting part of the high beam light distribution pattern of FIG. 4B.
FIG. 6A is a timing chart illustrating a state of control performed to change the additional light distribution pattern in the course of transition in FIGS. 5A to 5E.
FIG. 6B is a timing chart similar to that of FIG. 6A in a first modified example of the foregoing embodiment.
FIGS. 7A to 7J are diagrams which are similar to FIGS. 5A to 5J, respectively, but illustrate operations of the first modified example.
FIG. 8 is a cross-sectional view which is similar to FIG. 2 but illustrates a second modified example of the foregoing embodiment.
FIG. 9 is a front view illustrating a vehicle lamp according to another embodiment of the present invention.
FIG. 10 is a cross-sectional view taken along a line II-II of FIG. 9.
FIG. 11 is a cross-sectional view taken along a line III-III of FIG. 10.
FIG. 12A is a diagram illustrating a high beam light distribution pattern formed on a virtual vertical screen at a position 25 m ahead of the lamp by light emitted from the vehicle lamp when a movable shade of each lamp unit is located at a light blocking release position.
FIG. 12B is a diagram illustrating a high beam light distribution pattern formed on the virtual vertical screen at a position 25 m ahead of the lamp by light emitted from the vehicle lamp when the movable shade of each lamp unit is located at a first light blocking position.
FIG 13A is a diagram illustrating the high beam light distribution pattern when the movable shade is located at a second light blocking position.
FIG. 13B is a diagram illustrating the high beam light distribution pattern when the movable shade is located at a third light blocking position.
FIG. 14A is a diagram illustrating, for a first lamp unit, an additional light distribution pattern serving as a variable light distribution pattern constituting part of the high beam light distribution pattern of FIG. 12A.
FIGS. 14B to 14D are diagrams each illustrating, for the first lamp unit, an additional light distribution pattern, serving as a variable light distribution pattern constituting part of the high beam light distribution pattern, in the course of transition.
FIG. 14E is a diagram illustrating, for the first lamp unit, an additional light distribution pattern serving as a variable light distribution pattern constituting part of the high beam light distribution pattern of FIG. 12B.
FIG. 14F is a diagram illustrating, for a second lamp unit, an additional light distribution pattern serving as a variable light distribution pattern constituting part of the high beam light distribution pattern of FIG. 12A.
FIGS. 14G to 14I are diagrams each illustrating, for the second lamp unit, an additional light distribution pattern, serving as a variable light distribution pattern constituting part of the high beam light distribution pattern, in the course of transition.
FIG. 14J is a diagram illustrating, for the second lamp unit, an additional light distribution pattern serving as a variable light distribution pattern constituting part of the high beam light distribution pattern of FIG. 12B.
FIG. 15A is a timing chart illustrating a state of control carried out to change the additional light distribution pattern, provided by the first lamp unit, in the course of transition in FIGS. 14A to 14E.
FIG. 15B is a timing chart illustrating a state of control carried out to change the additional light distribution pattern, provided by the second lamp unit, in the course of transition in FIGS. 14F to 14J.
FIG. 16A is a diagram illustrating, for the first lamp unit, an additional light distribution pattern for the high beam light distribution pattern of FIG. 12A.
FIGS. 16B to 16D are diagrams each illustrating, for the first lamp unit, an additional light distribution pattern in the course of transition.
FIG. 16E is a diagram illustrating, for the first lamp unit, an additional light distribution pattern for the high beam light distribution pattern of FIG. 13A.
FIG. 16F is a diagram illustrating, for the second lamp unit, an additional light distribution pattern for the high beam light distribution pattern of FIG. 12A.
FIGS. 16G to 16I are diagrams each illustrating, for the second lamp unit, an additional light distribution pattern in the course of transition.
FIG. 16J is a diagram illustrating, for the second lamp unit, an additional light distribution pattern for the high beam light distribution pattern of FIG. 13A.
FIG. 17A is a timing chart illustrating a state of control carried out to change the additional light distribution pattern, provided by the first lamp unit, in the course of transition in FIGS. 16A to 16E.
FIG. 17B is a timing chart illustrating a state of control carried out to change the additional light distribution pattern, provided by the second lamp unit, in the course of transition in FIGS. 16F to 16J.
FIG. 18 is a diagram is similar to FIG. 9 but illustrates a modified example of the foregoing embodiment.

### DETAILED DESCRIPTION OF EXEMPLARY EMBODIMENTS FIRST EMBODIMENT

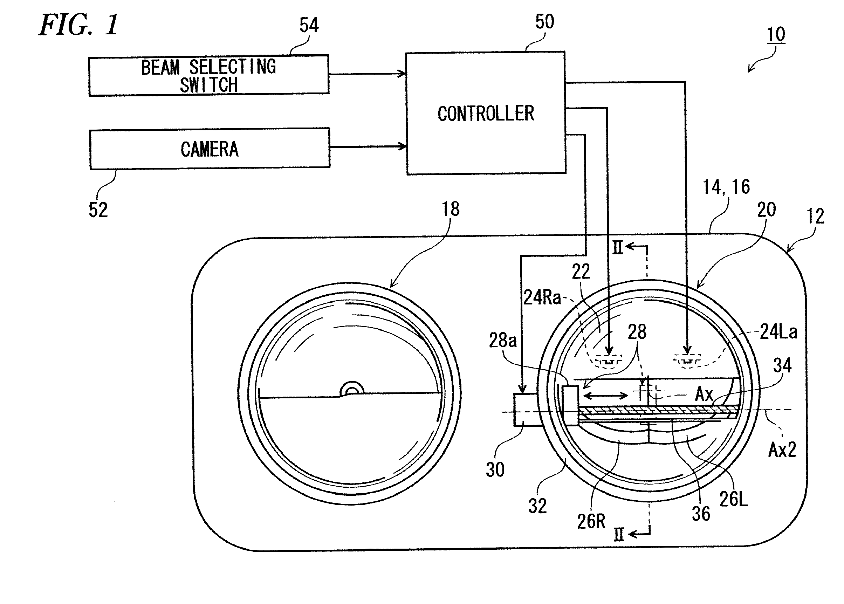

FIG. 1 is a front view illustrating a vehicle lamp 10 according to one embodiment of the present invention.

As illustrated in FIG. 1, the vehicle lamp 10 according to the present embodiment includes: a lamp main body 12; a controller 50; and a camera 52 for capturing an image of a scene in front of a vehicle.

Further, in the vehicle lamp 10, the controller 50 is configured to receive: a signal of image data captured by the camera 52; and a beam selecting signal provided from a beam selecting switch 54 for allowing selection between a low beam and a high beam.

The lamp main body 12 includes two lamp units 18 and 20 in a lamp chamber. The lamp chamber is formed by a lamp body 14 and a translucent cover 16 attached to a front end opening of the lamp body 14.

The lamp unit 18 is a lamp unit for forming a low beam light distribution pattern and is formed as a projector type lamp unit.

The lamp unit 20 is a lamp unit for forming an additional light distribution pattern that is added to a low beam light distribution pattern when a high beam light distribution pattern is formed, and is formed as a projector type lamp unit.

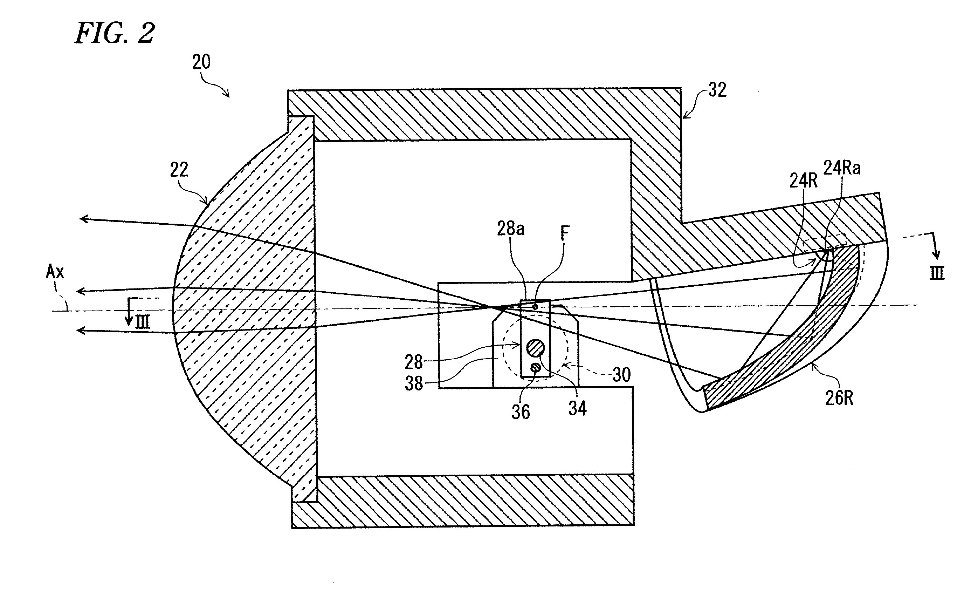

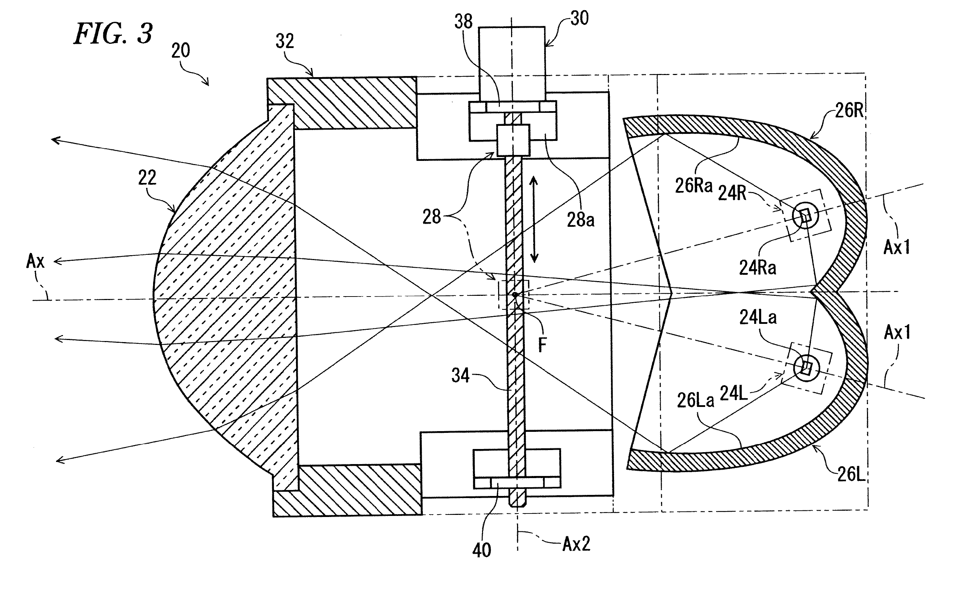

FIG. 2 is a cross-sectional view taken along a line II-II of FIG. 1, and FIG. 3 is a cross-sectional view taken along a line III-III of FIG. 2.

As illustrated in FIGS. 2 and 3, the lamp unit 20 for forming an additional light distribution pattern includes: a projection lens 22; a pair of right and left light sources 24Ra and 24La; a pair of right and left reflectors 26R and 26L; a movable shade 28; an actuator 30; and a holder 32 for holding these components.

The projection lens 22 consists of a plano-convex aspheric lens in which a front surface is a convex surface and a rear surface is a plane surface, and is located on an optical axis Ax extending in a vehicle longitudinal direction. Further, through the projection lens 22, a light source image formed on its rear focal plane is projected as a reversed image onto a virtual vertical screen located in front of the lamp.

The pair of right and left light sources 24Ra and 24La are light emitting chips of white light emitting diodes 24R and 24L, and are symmetrically placed to face substantially downward at positions located behind a rear focal point F of the projection lens 22 and away from the optical axis Ax in a lateral, obliquely upward direction.

The pair of right and left reflectors 26R and 26L are symmetrically placed so as to cover the pair of right and left light sources 24Ra and 24La from below in the form of an approximate semi-dome. In this case, the pair of right and left reflectors 26R and 26L are formed so as to be integral with each other.

Reflection surfaces 26Ra and 26La of the right and left reflectors 26R and 26L each have a longitudinal axis on an axial line Ax1 extending obliquely downward toward a position located in front of the lamp, and are each formed by a substantially elliptical curved surface in which a light emitting center of the light source 24Ra or 24La serves as a first focal point and settings are made so that an eccentricity thereof is gradually increased from a vertical cross section toward a horizontal cross section. Thus, the reflectors 26R and 26L allow light from the light sources 24Ra and 24La to substantially converge to a position located slightly in front of the rear focal point F in the vertical cross section, and allow the converged position to move considerably forward in the horizontal cross section.

In this case, in plan view, the pair of right and left reflectors 26R and 26L are each placed so that the axial line Ax1 serving as its center axis intersects the optical axis Ax in the vicinity of the rear focal point F, thus increasing concentration of reflection light from the reflectors 26R and 26L to the rear focal point F.

The movable shade 28 is formed by a rectangular parallelepiped block having a vertically long rectangular outer shape when viewed from the front of the lamp, and is placed so as to be movable in a lateral direction (i.e., in a vehicle width direction) in the vicinity of the rear focal plane of the projection lens 22.

The movable shade 28 is screwed to a shaft 34 extending laterally below the optical axis Ax, and is slidably engaged with a guide pin 36. In this case, the shaft 34 is located on a horizontal axial line Ax2 extending laterally so as to pass through a position located substantially directly below the rear focal point F, and the guide pin 36 is located below and near the shaft 34.

The shaft 34 is connected at its one end portion to the actuator 30. The actuator 30 is fixed and supported by a bracket 38 placed and fixed in a cut-out of the holder 32. Further, the shaft 34 is rotatably supported at its other end portion by a bracket 40 placed and fixed in a cut-out of the holder 32. Furthermore, the guide pin 36 is fixed and supported at its end portions by the brackets 38 and 40.

The actuator 30 may be a stepping motor and is driven to rotate the shaft 34, thereby allowing the movable shade 28 screwed to the shaft 34 to move laterally along the horizontal axial line Ax2.

Moreover, the actuator 30 is driven to allow the movable shade 28 to be located at a light blocking release position indicated by a solid line in FIG. 3 and a light blocking position indicated by a chain double-dashed line in FIG. 3.

In this case, the light blocking release position is set at a right end position (i.e., a left end position when viewed from the front of the lamp) at which reflection light from the pair of right and left reflectors 26R and 26L is not blocked by the movable shade 28. On the other hand, the light blocking position is set at a position which is located on the optical axis Ax and at which light, included in reflection light from the pair of right and left reflectors 26R and 26L and passing through a region near the rear focal point F, is blocked by the movable shade 28. Note that the light blocking release position may be set at a left end position, and the light blocking position may be set at a position deviated laterally slightly from the position on the optical axis Ax.

The movable shade 28 is formed so that an upper end surface 28a thereof is located slightly above the optical axis Ax in a state where the movable shade 28 is screwed to the shaft 34. Further, since the movable shade 28 is engaged with the guide pin 36, the movable shade 28 is always kept in an upright position even when the shaft 34 is rotated.

As illustrated in FIG 1, the actuator 30 is driven by a drive control signal from the controller 50 based on input signals from the beam selecting switch 54 and the camera 52. Furthermore, based on the input signal from the beam selecting switch 54, the controller 50 also performs lighting and extinguishing control on each of the light sources 24Ra and 24La of the lamp unit 20. Besides, based on the input signal from the camera 52, the controller 50 also performs dimming control on each of the light sources 24Ra and 24La of the lamp unit 20.

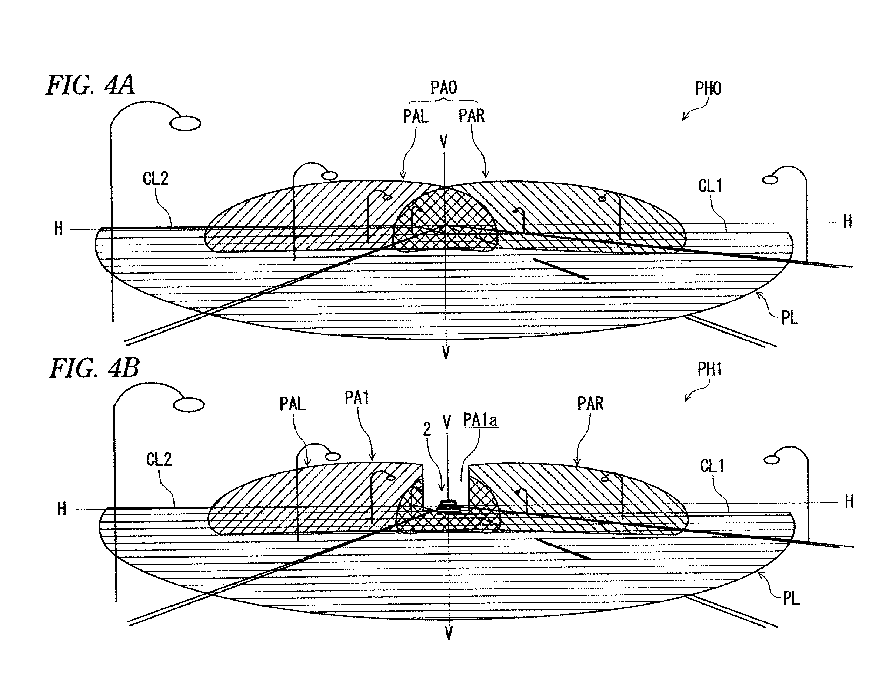

FIGS. 4A and 4B are diagrams each illustrating, in a perspective manner, a high beam light distribution pattern formed on a virtual vertical screen at a position 25 m ahead of the vehicle by light emitted from the vehicle lamp 10.

A high beam light distribution pattern PH0 illustrated in FIG. 4A is a normal high beam light distribution pattern, and is formed as a light distribution pattern provided by a combination of a low beam light distribution pattern PL and an additional light distribution pattern PA0.

The low beam light distribution pattern PL is a light distribution pattern formed by light emitted from the lamp unit 18, and is formed as a left low beam light distribution pattern having laterally uneven horizontal cut-off lines CL1 and CL2 at its upper edge.

The horizontal cut-off lines CL1 and CL2 are extended horizontally so as to be laterally uneven at a boundary defined by a line V-V serving as a vertical line passing through a point H-V that is a vanishing point in a frontal direction of the lamp. The cut-off line on the right side of the line V-V is formed to extend horizontally and to serve as the horizontal cut-off line CL I for an oncoming lane, and the cut-off line on the left side of the line V-V is formed to extend horizontally at a level higher than that of the horizontal cut-off line CL1 and to serve as the horizontal cut-off line CL2 for a lane on which the vehicle equipped with the vehicle lamp 10 is running. It is to be noted that an end portion of the horizontal cut-off line CL2, which is near the line V-V, is formed as an oblique cut-off line extended obliquely upward to the left at an inclination angle of 15° from an intersection point of the horizontal cut-off line CL1 and the line V-V.

In the low beam light distribution pattern PL, an elbow point, which is an intersection point of the horizontal cut-off line CL1 and the line V-V, is located about 0.5° to about 0.6° below the point H-V.

The additional light distribution pattern PA0 is a light distribution pattern formed by light emitted from the lamp unit 20. In this case, the additional light distribution pattern PA0 is an additional light distribution pattern formed when the pair of right and left light sources 24Ra and 24La are lit in a state where the movable shade 28 is located at the light blocking release position.

The additional light distribution pattern PA0 is a light distribution pattern provided by a combination of a pair of right and left light distribution patterns PAR and PAL that are symmetrically positioned with respect to the line V-V and partially overlapped each other, and is formed as a horizontally long light distribution pattern extended in an elongated manner toward right and left sides from the line V-V serving as its center.

The left light distribution pattern PAL is a light distribution pattern formed by light emitted from the right light source 24Ra and reflected by the right reflector 26R, and the right light distribution pattern PAR is a light distribution pattern formed by light emitted from the left light source 24La and reflected by the left reflector 26L.

The light distribution patterns PAL and PAR are formed so that lower edges thereof extend substantially horizontally below a line H-H that is a horizontal line passing through the point H-V, and upper edges thereof swell upward from lateral end positions of the lower edges in the form of an approximate ellipse that is horizontally long. In this case, the lower edges of the light distribution patterns PAL and PAR are formed so as to intersect the line V-V at a position about 2° to about 3° below the point H-V, and the upper edges of the light distribution patterns PAL and PAR are formed so as to intersect the line V-V at a position about 3° to about 5° above the point H-V.

Further, in the additional light distribution pattern PA0, a hot zone, which is a high light intensity region, is located in an area near the point H-V, where the pair of right and left light distribution patterns PAR and PAL overlap each other.

A high beam light distribution pattern PH1 illustrated in FIG. 4B is a high beam light distribution pattern having a partially cut-out shape unlike the high beam light distribution pattern PH0 illustrated in FIG. 4A.

The high beam light distribution pattern PH1 is formed as a light distribution pattern provided by a combination of: the low beam light distribution pattern PL; and an additional light distribution pattern PA1 having a partially cut-out shape unlike the additional light distribution pattern PA0 illustrated in FIG. 4A.

The additional light distribution pattern PA1 is an additional light distribution pattern formed when the pair of right and left light sources 24Ra and 24La are lit in a state where the movable shade 28 is located at the light blocking position indicated by the chain double-dashed lines in FIGS. 1 and 3.

The additional light distribution pattern PA1 is formed as a light distribution pattern in which a rectangular cut-out portion PA1a is formed in an upper region at a lateral center of the light distribution pattern unlike the additional light distribution pattern PA0 illustrated in FIG. 4A.

The cut-out portion PA1a is formed as a shadow of the movable shade 28 located at the light blocking position. In this case, since the upper end surface 28a of the movable shade 28 is formed into a horizontal plane at a position above and near the optical axis Ax, a lower edge of the cut-out portion PA1a extends horizontally in a region below and near the line H-H. Further, since right and left lateral surfaces of the movable shade 28 are each formed into a vertical plane, right and left lateral edges of the cut-out portion PA1a extend vertically on both sides of the line V-V.

Specifically, the cut-out portion PA1a is formed to have a lateral width of about 4° to 5° with respect to the line V-V, and the lower edge of the cut-out portion PA1a is located at substantially the same height as that of the horizontal cut-off line CL1 of the low beam light distribution pattern PL or located slightly above the horizontal cut-off line CL1 of the low beam light distribution pattern PL.

The high beam light distribution pattern PH1, having the additional light distribution pattern PA1 in which the above-described cut-out portion PA1a a is formed, makes it possible to improve forward visibility for a driver of the vehicle, equipped with the vehicle lamp 10, without giving glare to a driver of a preceding vehicle 2. In this case, when the cut-out portion PA1a is displaced slightly rightward, it is also possible to improve forward visibility for the driver of the vehicle, equipped with the vehicle lamp 10, without giving glare to a driver of an oncoming vehicle.

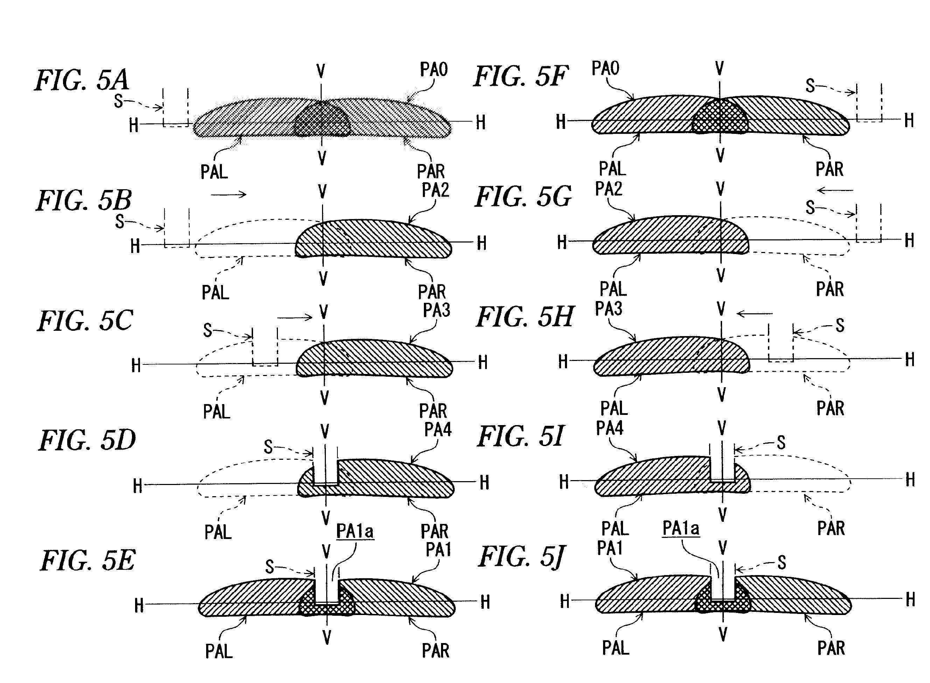

FIGS. 5A to 5J are diagrams each illustrating an additional light distribution pattern serving as a variable light distribution pattern.

Specifically, FIGS. 5A and 5F each illustrate the additional light distribution pattern PA0 included in the high beam light distribution pattern PH0 illustrated in FIG. 4A, and FIGS. 5E and 5J each illustrate the additional light distribution pattern PA1 included in the high beam light distribution pattern PH1 illustrated in FIG. 4B. Furthermore, FIGS. 5B to 5D are diagrams illustrating additional light distribution patterns PA2, PA3 and PA4, respectively, in the course of transition from the additional light distribution pattern PA0 of FIG. 5A to the additional light distribution pattern PA1 of FIG. 5E, and FIGS. 5G to 5I are diagrams illustrating additional light distribution patterns PA2, PA3 and PA4, respectively, in the course of transition from the additional light distribution pattern PA0 of FIG. 5F to the additional light distribution pattern PA1 of FIG. 5J.

In this case, the transition from the additional light distribution pattern PA0 illustrated in FIG. 5A to the additional light distribution pattern PA1 illustrated in FIG. 5E is made by moving the movable shade 28 leftward from the right side light blocking release position toward the light blocking position. On the other hand, the transition from the additional light distribution pattern PA0 illustrated in FIG. 5F to the additional light distribution pattern PA1 illustrated in FIG. 5J is made by moving the movable shade 28 rightward from the left side light blocking release position toward the light blocking position.

In the additional light distribution pattern PA0 illustrated in each of FIGS. 5A and 5F, a shadow S of the movable shade 28 at the light blocking release position is located at a position deviated leftward or rightward from the additional light distribution pattern PA0, and therefore, the pair of right and left light distribution patterns PAR and PAL are formed without any cut-out portion at all.

On the other hand, in the additional light distribution pattern PA1 illustrated in each of FIGS. 5E and 5J, the shadow S of the movable shade 28 at the light blocking position is located on the line V-V, and therefore, the cut-out portion PA1a is formed at the lateral center of the additional light distribution pattern PA1.

If the state in which the additional light distribution pattern PA0 is formed is maintained (i.e., if the state in which the pair of right and left light distribution patterns PAR and PAL are formed is maintained) when a transition is made from the additional light distribution pattern PA0 illustrated in FIG. 5A to the additional light distribution pattern PA1 illustrated in FIG. 5E, the shadow S of the movable shade 28 will be moved rightward through the left side light distribution pattern PAL, and an uncomfortable feeling might be given to the driver of the vehicle equipped with the vehicle lamp 10.

To cope with such a problem, in the present embodiment, the transition is made from the additional light distribution pattern PA0 to the additional light distribution pattern PA1 through the additional light distribution patterns PA2, PA3 an PA4.

Specifically, after the right light source 24Ra has been extinguished as illustrated in FIG. 5B to prevent the left light distribution pattern PAL from being formed as the additional light distribution pattern PA2, the movable shade 28 is moved rightward, and the movable shade 28 reaches the light blocking position as illustrated in FIG. 5D; then, the right light source 24Ra is lit to form the left light distribution pattern PAL. Thus, the shadow S of the movable shade 28 is prevented from being cast on the additional light distribution pattern PA3 in which the movable shade 28 is being moved from the light blocking release position to the light blocking position as illustrated in FIG. 5C.

Note that in the additional light distribution pattern PA4 illustrated in FIG. 5D, a left end portion of the right light distribution pattern PAR is cut out immediately before the movable shade 28 reaches the light blocking position, but the position of the cut-out portion is close to the line V-V, thus preventing the possibility that an uncomfortable feeling might be given to the driver of the vehicle equipped with the vehicle lamp 10.

On the other hand, during the transition made from the additional light distribution pattern PA0 illustrated in FIG. 5F to the additional light distribution pattern PA 1 illustrated in FIG. 5J, the moving direction of the movable shade 28 is reversed; therefore, when the movable shade 28 is moved in the reverse direction, the left light source 24La is extinguished, thus allowing the transition to be made from the additional light distribution pattern PA0 to the additional light distribution pattern PA1 through the additional light distribution patterns PA2, PA3 and PA4 in which no right light distribution pattern PAR is formed.

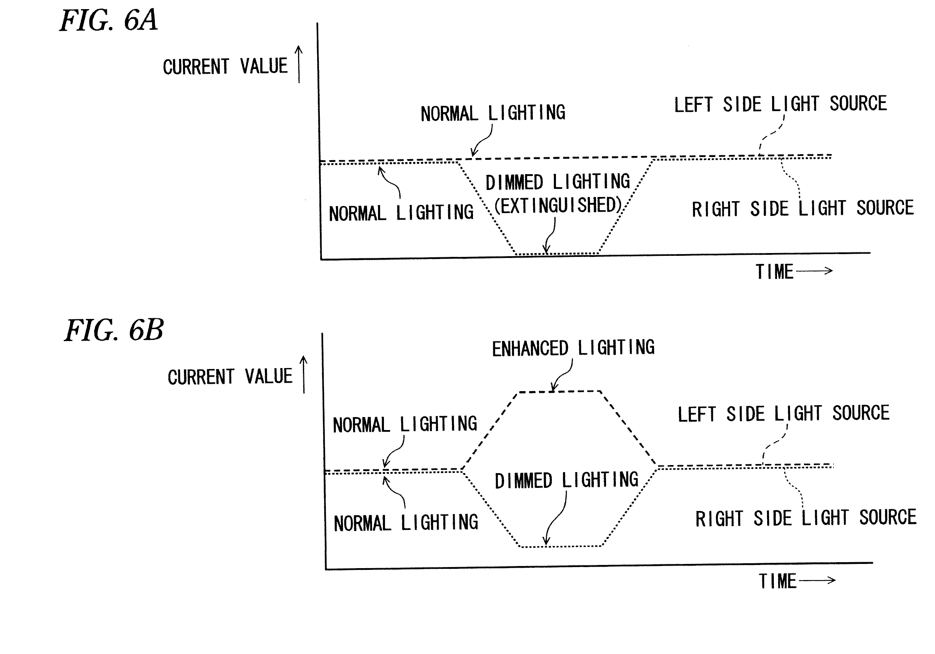

FIG. 6A is a timing chart illustrating a state of current control carried out on the pair of right and left light sources 24Ra and 24La by the controller 50 in order to change the additional light distribution pattern from the additional light distribution pattern PA0 to the additional light distribution pattern PA1.

As illustrated in FIG. 6A, the right light source 24Ra is extinguished in the state in which the movable shade 28 is located at the light blocking release position, and the actuator 30 is subsequently driven to move the movable shade 28 from the light blocking release position to the light blocking position; then, the right light source 24Ra is lit. On the other hand, the lit state of the light source 24La is maintained throughout this period of time.

Next, effects of the present embodiment will be described.

In the vehicle lamp 10 according to the present embodiment, a projector type lamp unit including the movable shade 28 is adopted as the lamp unit 20 for forming the additional light distribution pattern PA0 as a variable light distribution pattern for a high beam. Furthermore, the vehicle lamp 10 is formed so that when a particular object present in front of the vehicle during running of the vehicle is detected by the camera 52 serving as a detector, the controller 50 serving as a drive controller laterally moves the movable shade 28 from the light blocking release position to the light blocking position at which light for forming a given region near a center of the additional light distribution pattern PA0 is blocked, thus making it possible to obtain the following effects.

Specifically, the position of the given region (i.e., the position of the cut-out portion PA1a of the additional light distribution pattern PA1) is moved laterally in accordance with a position of the preceding vehicle 2 or oncoming vehicle, thus making it possible to improve forward visibility for the driver of the vehicle, equipped with the vehicle lamp 10, without giving glare to the driver of the preceding vehicle 2 or oncoming vehicle. In addition, the present embodiment is capable of implementing this feature by using the single lamp unit 20 and also capable of implementing this feature without any need for swiveling of the lamp unit 20.

Besides, the vehicle lamp 10 according to the present embodiment is formed so that the lamp unit 20 is provided with two sets of the light sources and reflectors, i.e., the light source 24Ra and the reflector 26R on the right side of the optical axis Ax and the light source 24La and the reflector 26L on the left side of the optical axis Ax. Further, the vehicle lamp 10 is provided with the controller 50 serving as a light amount controller for extinguishing the left side light source 24La when the movable shade 28 is moved from the left side light blocking release position to the light blocking position and for extinguishing the right side light source 24Ra when the movable shade 28 is moved from the right side light blocking release position to the light blocking position. Thus, the following effects are obtainable.

Specifically, the additional light distribution pattern PA0 will be formed as a light distribution pattern provided by a combination of the pair of right and left light distribution patterns PAR and PAL formed by light from the two sets of the light sources 24Ra and 24La and reflectors 26R and 26L. However, when the movable shade 28 is moved from the light blocking release position to the light blocking position, one of the light sources 24La and 24Ra is extinguished by the controller 50, thereby making it possible to prevent formation of a dark region moving from a lateral end portion of the additional light distribution pattern PA0 toward a center portion thereof. As a result, the possibility that an uncomfortable feeling might be given to the driver of the vehicle equipped with the vehicle lamp 10 can be eliminated.

As described above, according to the present embodiment, the vehicle lamp 10 configured to emit the additional light distribution pattern PA0 as a variable light distribution pattern for a high beam is capable of forming, with a simple lamp structure, the additional light distribution patterns PA0 and PA1 which can improve forward visibility for the driver of the vehicle, equipped with the vehicle lamp 10, without giving glare to the driver of the preceding vehicle 2 or oncoming vehicle in such a manner that prevents an uncomfortable feeling from being given to the driver of the vehicle equipped with the vehicle lamp 10.

### MODIFIED EXAMPLE 1 OF THE FIRST EMBODIMENT

Next, modified examples of the foregoing embodiment will be described.

First, a first modified example of the foregoing embodiment will be described.

In this modified example, a structure of the vehicle lamp 10 is similar to that of the vehicle lamp 10 according to the foregoing embodiment, but a configuration of the controller 50 serving as the light amount controller differs from that of the controller 50 according to the foregoing embodiment.

FIG. 6B is a timing chart illustrating a state of current control carried out on the pair of right and left light sources 24Ra and 24La by the controller 50 according to this modified example in order to change the additional light distribution pattern from the additional light distribution pattern PA0 to the additional light distribution pattern PA1.

As illustrated in FIG. 6B, when the movable shade 28 is moved from the left side light blocking release position to the light blocking position, the controller 50 according to this modified example reduces the amount of light from the left side light source 24La to half or less (e.g., about 20%) instead of extinguishing the left side light source 24La; on the other hand, when the movable shade 28 is moved from the right side light blocking release position to the light blocking position, the controller 50 according to this modified example reduces the amount of light from the right side light source 24Ra to half or less (e.g., about 20%) instead of extinguishing the right side light source 24Ra.

Further, as illustrated in FIG. 6B, when the movable shade 28 is moved from the left side light blocking release position to the light blocking position, the controller 50 according to this modified example increases the amount of light from the right side light source 24Ra by about 20% to about 100% (e.g., by about 80%); on the other hand, when the movable shade 28 is moved from the right side light blocking release position to the light blocking position, the controller 50 according to this modified example increases the amount of light from the left side light source 24La by about 20% to about 100% (e.g., by about 80%).

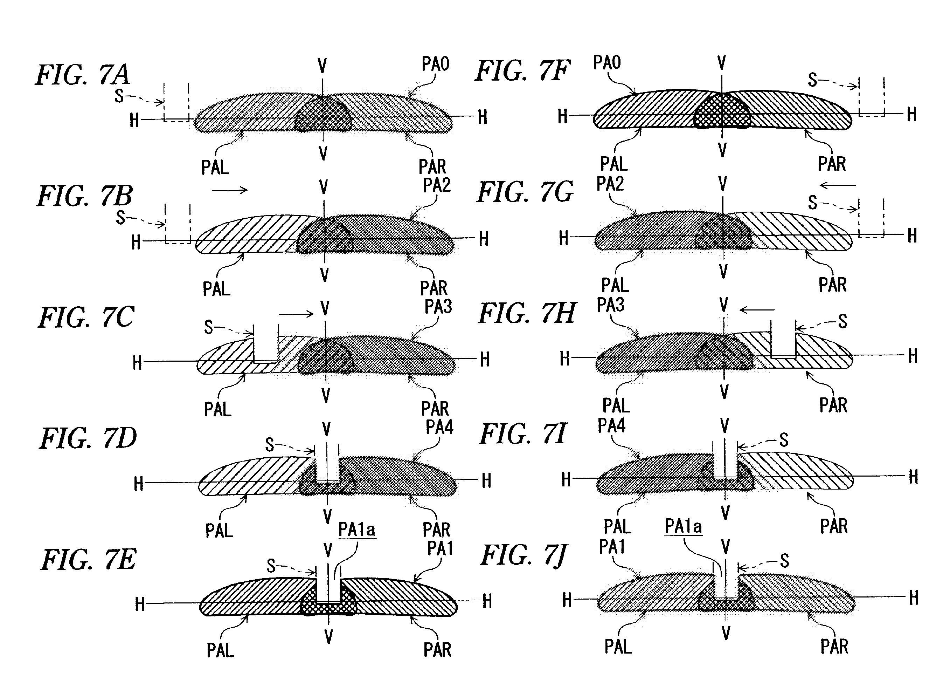

FIGS. 7A to 7J are diagrams which are similar to FIGS. 5A to 5J, respectively, but illustrate operations of this modified example.

As illustrated in FIGS. 7A to 7E, in this modified example, dimming control is performed on the right side light source 24Ra by the controller 50 when the movable shade 28 is moved leftward from the light blocking release position toward the light blocking position, and the left side light distribution pattern PAL is thus dimmed accordingly; on the other hand, during this movement, enhancing control is performed on the left side light source 24La, and the right side light distribution pattern PAR is thus brightened accordingly, thereby allowing overall brightness of each of the additional light distribution patterns PA2, PA3 and PA4 to be maintained at a level close to that of the normal variable light distribution pattern PA0. As a result, the possibility that an uncomfortable feeling might be given to the driver of the vehicle equipped with the vehicle lamp 10 can be further eliminated.

Note that in the course of the transition, the right side light source 24Ra is dimmed instead of being extinguished, and therefore, the shadow S of the movable shade 28 will be moved rightward through the left side light distribution pattern PAL as illustrated in FIG. 7C. However, since this light distribution pattern PAL is not a bright light distribution pattern, the possibility that an uncomfortable feeling might be given to the driver of the vehicle equipped with the vehicle lamp 10 is eliminated.

Similarly, as illustrated in FIGS. 7F to 7J, in this modified example, dimming control is performed on the left side light source 24La by the controller 50 when the movable shade 28 is moved rightward from the light blocking release position toward the light blocking position, and the right side light distribution pattern PAR is thus dimmed accordingly; on the other hand, during this movement, enhancing control is performed on the right side light source 24Ra, and the left side light distribution pattern PAL is thus brightened accordingly, thereby allowing overall brightness of each of the additional light distribution patterns PA2, PA3 and PA4 to be maintained at a level close to that of the normal variable light distribution pattern PA0. As a result, the possibility that an uncomfortable feeling might be given to the driver of the vehicle equipped with the vehicle lamp 10 can be further eliminated.

Note that in the course of the transition, the left side light source 24La is dimmed instead of being extinguished, and therefore, the shadow S of the movable shade 28 will be moved leftward through the right side light distribution pattern PAR as illustrated in FIG. 7H. However, since this light distribution pattern PAR is not a bright light distribution pattern, the possibility that an uncomfortable feeling might be given to the driver of the vehicle equipped with the vehicle lamp 10 is eliminated.

### MODIFIED EXAMPLE 2 OF THE FIRST EMBODIMENT

Next, a second modified example of the foregoing embodiment will be described.

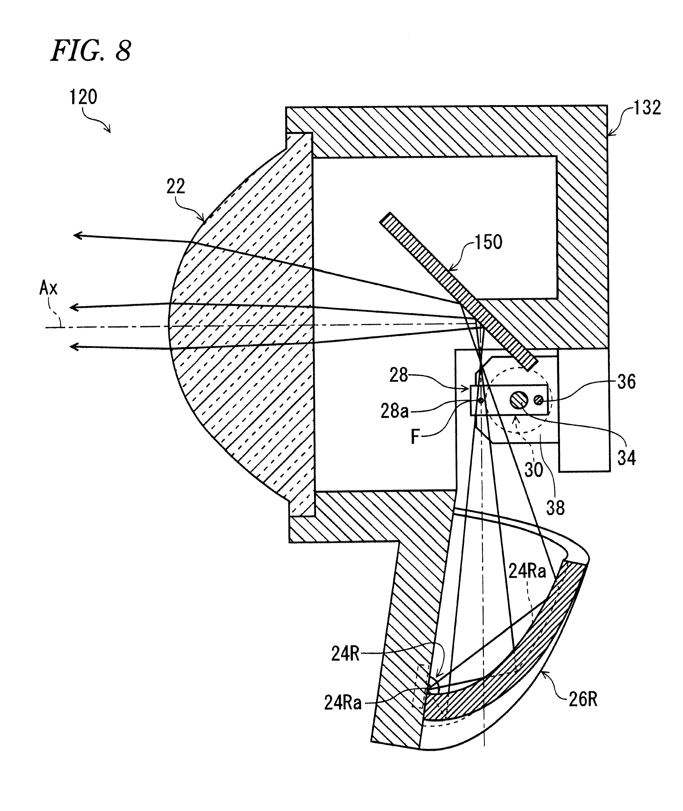

FIG. 8 is a diagram which is similar to FIG. 2 but illustrates a lamp unit 120 according to this modified example.

The lamp unit 120 is formed as a projector type lamp unit similar to the lamp unit 20 of the foregoing embodiment, but is different from the lamp unit 20 of the foregoing embodiment in that a mirror 150 is provided and the optical axis Ax is bent downward at right angles at the rear of the projection lens 22.

In this modified example, the mirror 150 is located in front of the rear focal point F of the projection lens 22, and therefore, the rear focal point F is optically located below the optical axis Ax. Accordingly, the movable shade 28 is also placed so that its position is rotated forward by 90° to face in a downward direction with respect to that of the movable shade 28 of the foregoing embodiment. Further, the pair of right and left light sources 24Ra and 24La and the pair of right and left reflectors 26R and 26L are placed so that the positions thereof are reversed in a longitudinal direction and are rotated forward by 90° to face in an upward direction with respect to the positions of the pair of right and left light sources 24Ra and 24La and the pair of right and left reflectors 26R and 26L of the foregoing embodiment. Moreover, a shape of a holder 132 for holding these components is accordingly different from that of the holder 32 of the foregoing embodiment.

Also when the structure of this modified example is adopted, effects similar to those of the foregoing embodiment are obtainable.

Furthermore, the adoption of the structure of this modified example makes it possible to considerably reduce a longitudinal length of the lamp unit 120 as compared with that of the lamp unit 20 of the foregoing embodiment.

The foregoing embodiment and the modified examples thereof have been described on the assumption that the pair of right and left light sources 24Ra and 24La of the lamp unit 20 (120) are light emitting chips of the white light emitting diodes 24R and 24L, but effects similar to those of the foregoing embodiment and modified examples are obtainable also when a light emitting part or the like of a discharge bulb is used as a light source.

In the foregoing embodiment and the modified examples thereof, the lamp unit 18 of the vehicle lamp 10 is configured to emit a left low beam light distribution pattern as the low beam light distribution pattern PL. However, also when the lamp unit 18 is configured to emit a right low beam light distribution pattern, effects similar to those of the foregoing embodiment and modified examples are obtainable by adopting structures similar to those described in the foregoing embodiment and modified examples.

### SECOND EMBODIMENT

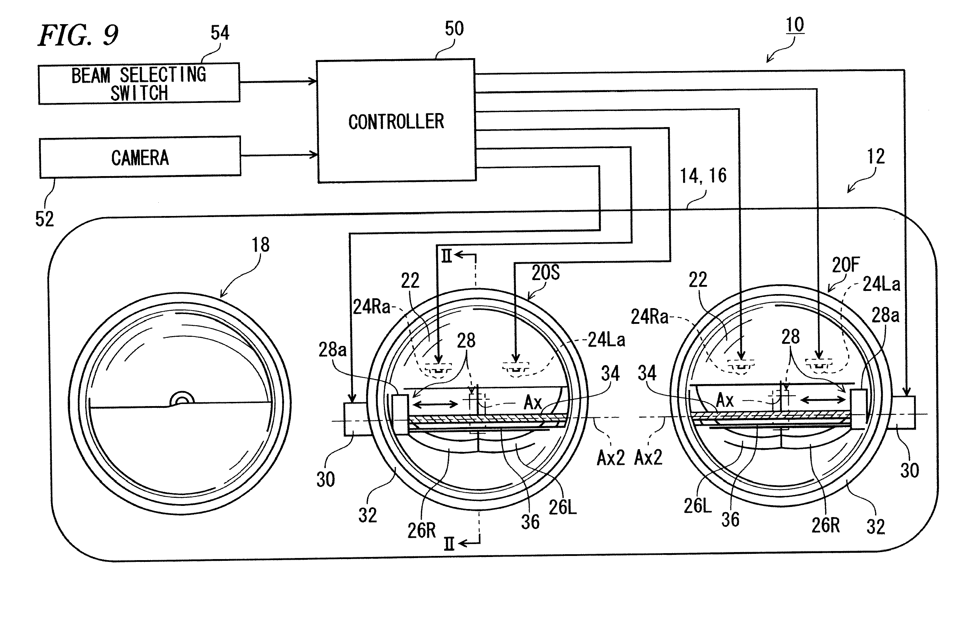

FIG. 9 is a front view illustrating a vehicle lamp 10 according to a second embodiment of the present invention.

As illustrated in FIG. 9, the vehicle lamp 10 according to the present embodiment includes: a lamp main body 12; a controller 50; and a camera 52 for capturing an image of a scene in front of a vehicle.

Further, in the vehicle lamp 10, the controller 50 is configured to receive: a signal of image data taken by the camera 52; and a beam selecting signal provided from a beam selecting switch 54 for allowing selection between a low beam and a high beam.

The lamp main body 12 includes three lamp units 18, 20F and 20S in a lamp chamber. The lamp chamber is formed by a lamp body 14 and a translucent cover 16 attached to a front end opening of the lamp body 14.

The lamp unit 18 is a lamp unit for forming a low beam light distribution pattern and is formed as a projector type lamp unit.

The lamp units 20F and 20S are first and second lamp units for forming additional light distribution patterns added to a low beam light distribution pattern when a high beam light distribution pattern is formed, and are each formed as a projector type lamp unit.

The first and second lamp units 20F and 20S are symmetrically formed. Therefore, the following description will be made about the second lamp unit 20S.

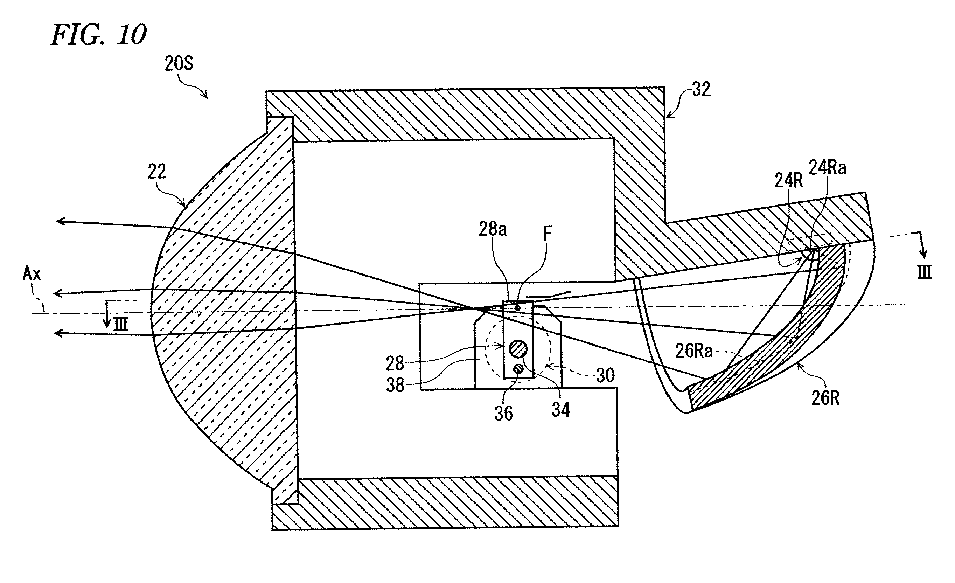

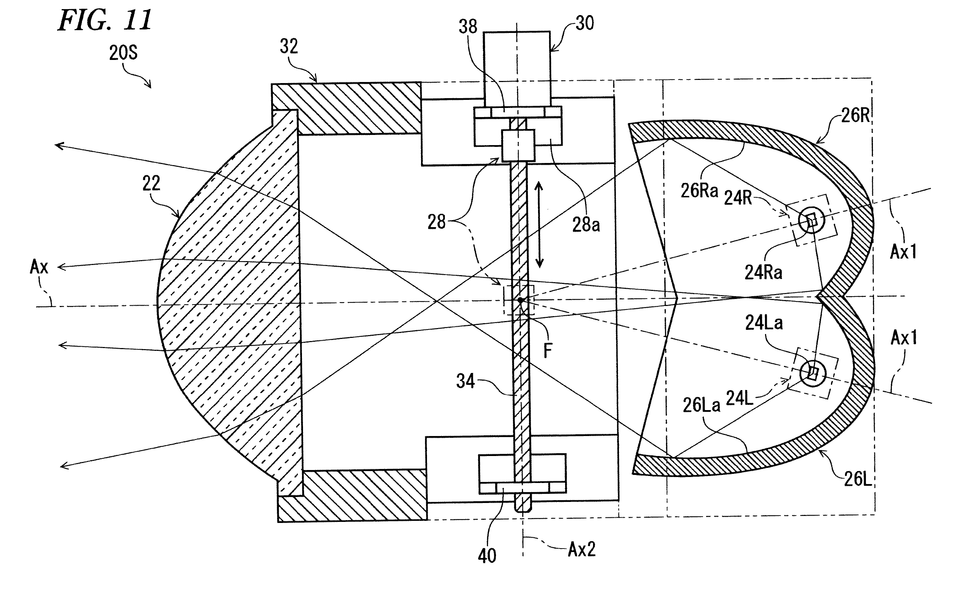

FIG. 10 is a cross-sectional view taken along a line II-II of FIG. 9, and FIG. 11 is a cross-sectional view taken along a line III-III of FIG. 10.

As also illustrated in FIGS. 10 and 11, the second lamp unit 20S includes: a projection lens 22; a pair of right and left light sources 24Ra and 24La; a pair of right and left reflectors 26R and 26L; a movable shade 28; an actuator 30; and a holder 32 for holding these components.

The projection lens 22 consists of a plano-convex aspheric lens in which a front surface is a convex surface and a rear surface is a plane surface, and is located on an optical axis Ax extending in a vehicle longitudinal direction. Further, through the projection lens 22, a light source image formed on its rear focal plane is projected as a reversed image onto a virtual vertical screen located in front of the lamp.

The pair of right and left light sources 24Ra and 24La are light emitting chips of white light emitting diodes 24R and 24L, and are symmetrically placed to face substantially downward at positions located behind a rear focal point F of the projection lens 22 and away from the optical axis Ax in a laterally obliquely upward direction.

The pair of right and left reflectors 26R and 26L are symmetrically placed so as to cover the pair of right and left light sources 24Ra and 24La from below in the form of an approximate semi-dome. In this case, the pair of right and left reflectors 26R and 26L are formed so as to be integral with each other.

Reflection surfaces 26Ra and 26La of the right and left reflectors 26R and 26L each have a longitudinal axis on an axial line Ax1 extending obliquely downward toward a position located in front of the lamp, and are each formed by a substantially elliptical curved surface in which a light emitting center of the light source 24Ra or 24La serves as a first focal point and settings are made so that an eccentricity thereof is gradually increased from a vertical cross section toward a horizontal cross section. Thus, the reflectors 26R and 26L allow light from the light sources 24Ra and 24La to substantially converge to a position located slightly in front of the rear focal point F in the vertical cross section, and allow the converged position to move considerably forward in the horizontal cross section.

In this case, in plan view, the pair of right and left reflectors 26R and 26L are each placed so that the axial line Ax1 serving as its center axis intersects the optical axis Ax in the vicinity of the rear focal point F, thus increasing concentration of reflection light from the reflectors 26R and 26L to the rear focal point F.

The movable shade 28 is formed by a rectangular parallelepiped block having a vertically long rectangular outer shape when viewed from the front of the lamp, and is placed so as to be movable in a lateral direction (i.e., in a vehicle width direction) in the vicinity of the rear focal plane of the projection lens 22.

The movable shade 28 is screwed to a shaft 34 extending laterally below the optical axis Ax, and is slidably engaged with a guide pin 36. In this case, the shaft 34 is located on a horizontal axial line Ax2 extending laterally so as to pass through a position located substantially directly below the rear focal point F, and the guide pin 36 is located below and near the shaft 34.

The shaft 34 is connected at its one end portion to the actuator 30. The actuator 30 is fixed and supported by a bracket 38 placed and fixed in a cut-out of the holder 32. Further, the shaft 34 is rotatably supported at its other end portion by a bracket 40 placed and fixed in a cut-out of the holder 32. Furthermore, the guide pin 36 is fixed and supported at its end portions by the brackets 38 and 40.

The actuator 30 is formed by a stepping motor or the like and is driven to rotate the shaft 34, thereby allowing the movable shade 28 screwed to the shaft 34 to move laterally along the horizontal axial line Ax2.

Moreover, the actuator 30 is driven to allow the movable shade 28 to be located at a light blocking release position indicated by a solid line in FIG. 11 and a light blocking position indicated by a chain double-dashed line, for example, in FIG. 11.

In this case, the light blocking release position is set at a right end position (i.e., a left end position when viewed from the front of the lamp) at which reflection light from the pair of right and left reflectors 26R and 26L is not blocked by the movable shade 28; on the other hand, the light blocking position is set at a position at which part of reflection light from the pair of right and left reflectors 26R and 26L is blocked by the movable shade 28 (e.g., at a position, which is located on the optical axis Ax, and at which part of the reflection light passing through a region in the vicinity of the rear focal point F, is blocked as indicated by the chain double-dashed line in FIG. 11).

The movable shade 28 is formed so that an upper end surface 28a thereof is located slightly above the optical axis Ax in a state where the movable shade 28 is screwed to the shaft 34. Further, since the movable shade 28 is engaged with the guide pin 36, the movable shade 28 is always kept in an upright position even when the shaft 34 is rotated.

As illustrated in FIG. 9, the actuator 30 is driven by a drive control signal from the controller 50 based on input signals from the beam selecting switch 54 and the camera 52. Furthermore, based on the input signal from the beam selecting switch 54, the controller 50 also performs lighting and extinguishing control on each of the light sources 24Ra and 24La of the first lamp unit 20F and each of the light sources 24Ra and 24La of the second lamp unit 20S. Besides, based on the input signal from the camera 52, the controller 50 also performs enhancing control on each of the light sources 24Ra and 24La of the first lamp unit 20F and each of the light sources 24Ra and 24La of the second lamp unit 20S.

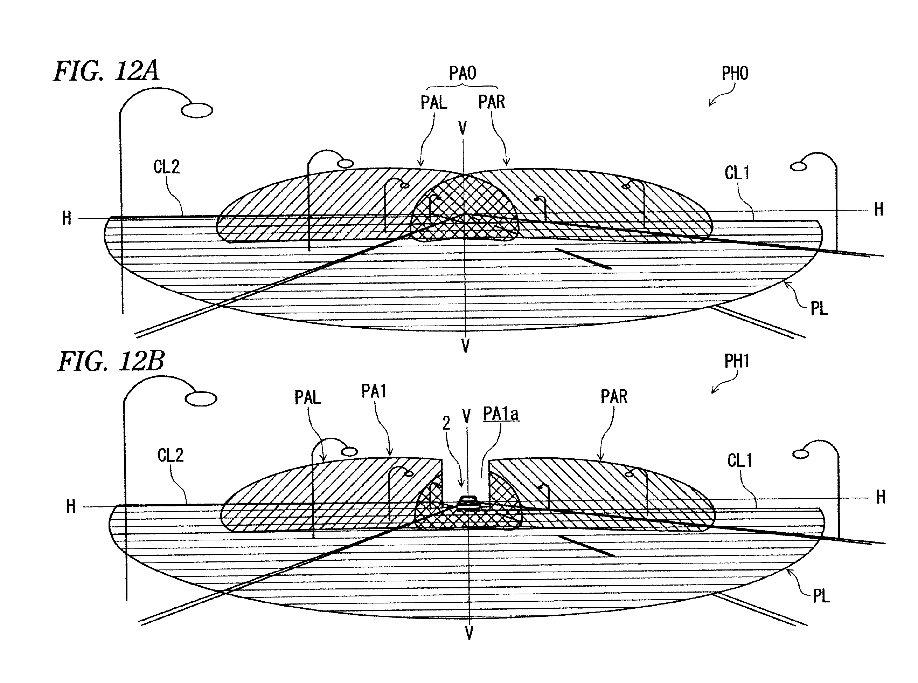

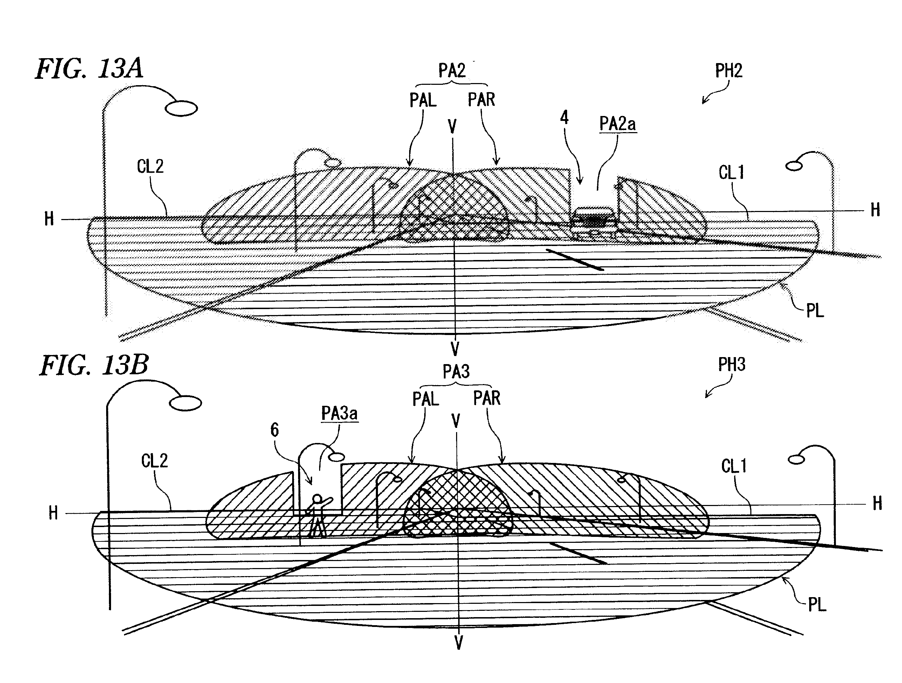

FIGS. 12A and 12B and FIGS. 13A and 13B are diagrams each illustrating, in a perspective manner, a high beam light distribution pattern formed on a virtual vertical screen at a position 25 m ahead of the vehicle by light emitted from the vehicle lamp 10 according to the present embodiment.

A high beam light distribution pattern PH0 illustrated in FIG. 12A is a normal high beam light distribution pattern, and is formed as a light distribution pattern provided by a combination of a low beam light distribution pattern PL and an additional light distribution pattern PA0.

The low beam light distribution pattern PL is a light distribution pattern formed by light emitted from the lamp unit 18, and is formed as a left low beam light distribution pattern having laterally uneven horizontal cut-off lines CL1 and CL2 at its upper edge.

The horizontal cut-off lines CL1 and CL2 are extended horizontally so as to be laterally uneven at a boundary defined by a line V-V serving as a vertical line passing through a point H-V that is a vanishing point in a frontal direction of the lamp. The cut-off line on the right side of the line V-V is formed to extend horizontally and to serve as the horizontal cut-off line CL 1 for an oncoming lane, and the cut-off line on the left side of the line V-V is formed to extend horizontally at a level higher than that of the horizontal cut-off line CL1 and to serve as the horizontal cut-off line CL2 for a lane on which the vehicle equipped with the vehicle lamp 10 is running. It is to be noted that an end portion of the horizontal cut-off line CL2, which is near the line V-V, is formed as an oblique cut-off line extended obliquely upward to the left at an inclination angle of 15° from an intersection point of the horizontal cut-off line CL1 and the line V-V.

In the low beam light distribution pattern PL, an elbow point, which is an intersection point of the horizontal cut-off line CL1 and the line V-V, is located about 0.5° to about 0.6° below the point H-V.

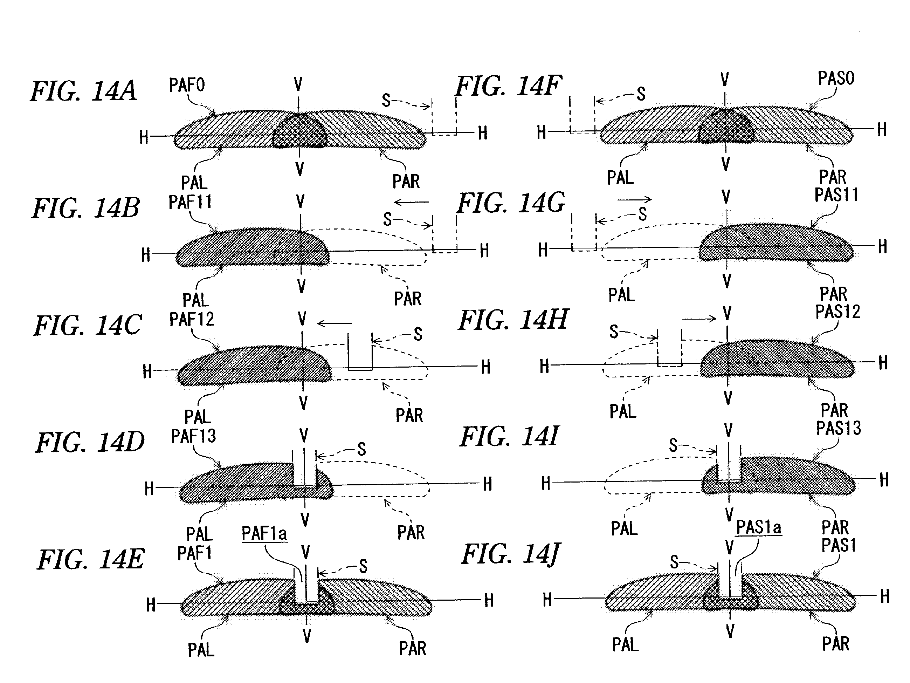

The additional light distribution pattern PA0 is a light distribution pattern provided by superposition of additional light distribution patterns PAF0 and PAS0 (see FIGS. 14A and 14F) having the same shape and formed by light emitted from the first and second lamp units 20F and 20S, respectively.

In this case, the additional light distribution pattern PA0 is an additional light distribution pattern formed when the pair of right and left light sources 24Ra and 24La in each of the lamp units 20F and 20S are lit in a state where the movable shade 28 of each of the lamp units 20F and 20S is located at the light blocking release position.

The additional light distribution pattern PA0 is a light distribution pattern provided by a combination of a pair of right and left light distribution patterns PAR and PAL that are symmetrically positioned with respect to the line V-V and partially overlapped each other, and is formed as a horizontally long light distribution pattern extended in an elongated manner toward right and left sides from the line V-V serving as its center.

The left light distribution pattern PAL is a light distribution pattern formed by light emitted from the right light source 24Ra and reflected by the right reflector 26R, and the right light distribution pattern PAR is a light distribution pattern formed by light emitted from the left light source 24La and reflected by the left reflector 26L.

The light distribution patterns PAL and PAR are formed so that lower edges thereof extend substantially horizontally below a line H-H that is a horizontal line passing through the point H-V, and upper edges thereof swell upward from lateral end positions of the lower edges in the form of an approximate ellipse that is horizontally long. In this case, the lower edges of the light distribution patterns PAL and PAR are formed so as to intersect the line V-V at a position about 2° to 3° below the point H-V, and the upper edges of the light distribution patterns PAL and PAR are formed so as to intersect the line V-V at a position about 3° to 5° above the point H-V.

Further, in the additional light distribution pattern PA0, a hot zone, which is a high light intensity region, is located in an area near the point H-V, where the pair of right and left light distribution patterns PAR and PAL overlap each other.

A high beam light distribution pattern PH1 illustrated in FIG. 12B is a high beam light distribution pattern having a partially cut-out shape unlike the high beam light distribution pattern PH0 illustrated in FIG. 12A.

The high beam light distribution pattern PH1 is formed as a light distribution pattern provided by a combination of: the low beam light distribution pattern PL; and an additional light distribution pattern PA1 having a partially cut-out shape unlike the additional light distribution pattern PA0 illustrated in FIG. 12A.

The additional light distribution pattern PA1 is an additional light distribution pattern formed when the pair of right and left light sources 24Ra and 24La in each of the lamp units 20F and 20S are lit in a state where the movable shade 28 of each of the lamp units 20F and 20S is located at a first light blocking position indicated by a chain double-dashed line in FIG. 9.

The additional light distribution pattern PA1 is formed as a light distribution pattern in which a rectangular cut-out portion PA1a is formed in an upper region at a lateral center of the additional light distribution pattern PA1 unlike the additional light distribution pattern PA0 illustrated in FIG. 12A.

The cut-out portion PA1a is formed as a shadow of the movable shade 28 located at the first light blocking position. In this case, since the upper end surface 28a of the movable shade 28 is formed into a horizontal plane at a position above and near the optical axis Ax, a lower edge of the cut-out portion PA 1a extends horizontally in a region below and near the line H-H. Further, since right and left lateral surfaces of the movable shade 28 are each formed into a vertical plane, right and left lateral edges of the cut-out portion PA1 a extend vertically on both sides of the line V-V.

Specifically, the cut-out portion PA1a is formed to have a lateral width of about 4° to about 5° with respect to the line V-V, and the lower edge of the cut-out portion PA1a is located at substantially the same height as that of the horizontal cut-off line CL1 of the low beam light distribution pattern PL or located slightly above the horizontal cut-off line CL1 of the low beam light distribution pattern PL.

The high beam light distribution pattern PH1, having the additional light distribution pattern PA1 in which the above-described cut-out portion PA1a is formed, makes it possible to improve forward visibility for a driver of the vehicle, equipped with the vehicle lamp 10, without giving glare to a driver of a preceding vehicle 2.

Each of high beam light distribution patterns PH2 and PH3 illustrated in FIGS. 13A and 13B, respectively, is also a high beam light distribution pattern having a partially cut-out shape unlike the high beam light distribution pattern PH0 illustrated in FIG. 12A.

In this case, the additional light distribution pattern PA2 illustrated in FIG. 13A is an additional light distribution pattern formed when the pair of right and left light sources 24Ra and 24La in each of the lamp units 20F and 20S are lit in a state where the movable shade 28 in each of the lamp units 20F and 20S is located at a second light blocking position at which the movable shade 28 is displaced leftward from the first light blocking position.

In the additional light distribution pattern PA2, a cut-out portion PA2a is located on the right side of the line V-V. Therefore, it is possible to improve forward visibility for the driver of the vehicle, equipped with the vehicle lamp 10, without giving glare to a driver of an oncoming vehicle 4. In this case, the cut-out portion PA2a is displaced rightward in accordance with positional change information of the oncoming vehicle 4 inputted from the camera 52.

On the other hand, the additional light distribution pattern PA3 illustrated in FIG. 13B is an additional light distribution pattern formed when the pair of right and left light sources 24Ra and 24La in each of the lamp units 20F and 20S are lit in a state where the movable shade 28 in each of the lamp units 20F and 20S is located at a third light blocking position at which the movable shade 28 is displaced rightward from the first light blocking position.

In the additional light distribution pattern PA3, a cut-out portion PA3a is located on the left side of the line V-V, thus making it possible to improve forward visibility for the driver of the vehicle, equipped with the vehicle lamp 10, without giving glare to a pedestrian 6 on a road shoulder. In this case, the cut-out portion PA3a is displaced leftward in accordance with relative positional change information of the pedestrian 6 inputted from the camera 52.

FIGS. 14A to 14E are diagrams each illustrating an additional light distribution pattern serving as a variable light distribution pattern formed by light emitted from the first lamp unit 20F, and FIGS. 14F to 14J are diagrams each illustrating an additional light distribution pattern serving as a variable light distribution pattern formed by light emitted from the second lamp unit 20S.

Specifically, FIGS. 14A and 14F illustrate the additional light distribution patterns PAF0 and PAS0, respectively, in the high beam light distribution pattern PH0 illustrated in FIG. 12A, and FIGS. 14E and 14J illustrate additional light distribution patterns PAF1 and PAS1, respectively, in the high beam light distribution pattern PH1 illustrated in FIG. 12B. Furthermore, FIGS. 14B to 14D are diagrams illustrating additional light distribution patterns PAF11, PAF12 and PAF13, respectively, in the course of transition from the additional light distribution pattern PAF0 to the additional light distribution pattern PAF1, and FIGS. 14G to 14I are diagrams illustrating additional light distribution patterns PAS11, PAS12 and PAS13, respectively, in the course of transition from the additional light distribution pattern PAS0 to the additional light distribution pattern PAS1.

In this case, the transition from the additional light distribution pattern PAF0 illustrated in FIG. 14A to the additional light distribution pattern PAF1 illustrated in FIG. 14E is made by moving the movable shade 28 of the first lamp unit 20F rightward from the left side light blocking release position toward the first light blocking position. On the other hand, the transition from the additional light distribution pattern PAS0 illustrated in FIG. 14F to the additional light distribution pattern PAS1 illustrated in FIG. 14J is made by moving the movable shade 28 of the second lamp unit 20S leftward from the right side light blocking release position toward the first light blocking position.

In each of the additional light distribution patterns PAF0 and PAS0 illustrated in FIGS. 14A and 14F, respectively, a shadow S of the movable shade 28 at the light blocking release position is located at a position deviated rightward or leftward from the additional light distribution pattern PAF0 or PAS0, and therefore, the pair of right and left light distribution patterns PAR and PAL are formed without any cut-out portion at all.

On the other hand, in each of the additional light distribution patterns PAF1 and PAS1 illustrated in FIGS. 14E and 14J, respectively, the shadow S of the movable shade 28 at the first light blocking position is located on the line V-V and therefore, cut-out portions PAF1a and PAS1a are formed at the lateral center of the additional light distribution patterns PAF1 and PAS1, respectively.

If the state in which the additional light distribution pattern PAF0 is formed is maintained (i.e., if the state in which the pair of right and left light distribution patterns PAR and PAL are formed is maintained) when a transition is made from the additional light distribution pattern PAF0 illustrated in FIG. 14A to the additional light distribution pattern PAF1 illustrated in FIG. 14E, the shadow S of the movable shade 28 will be moved leftward through the right side light distribution pattern PAR, and an uncomfortable feeling might be given to the driver of the vehicle equipped with the vehicle lamp 10.

To cope with such a problem, in the present embodiment, the transition is made from the additional light distribution pattern PAF0 to the additional light distribution pattern PAF1 through the additional light distribution patterns PAF11, PAF12 and PAF13.

Specifically, after the left side light source 24La has been extinguished as illustrated in FIG. 14B to prevent the right light distribution pattern PAR from being formed as the additional light distribution pattern PAF11, the movable shade 28 is moved rightward, and the movable shade 28 reaches the first light blocking position as illustrated in FIG. 14D; then, the left side light source 24La is lit to form the right light distribution pattern PAR. Thus, the shadow S of the movable shade 28 is prevented from being cast on the additional light distribution pattern PAF12 in which the movable shade 28 is being moved from the light blocking release position to the first light blocking position as illustrated in FIG. 14C.

Note that in the additional light distribution pattern PAF13 illustrated in FIG. 14D, a right end portion of the left light distribution pattern PAL is cut out immediately before the movable shade 28 reaches the first light blocking position, but the position of the cut-out portion is close to the line V-V, thus preventing the possibility that an uncomfortable feeling might be given to the driver of the vehicle equipped with the vehicle lamp 10.

On the other hand, during the transition made from the additional light distribution pattern PAS0 illustrated in FIG. 14F to the additional light distribution pattern PAS1 illustrated in FIG. 14J, the moving direction of the movable shade 28 is reversed. Therefore, when the movable shade 28 is moved in the reverse direction, the right light source 24Ra is extinguished, thus allowing the transition to be made from the additional light distribution pattern PAS0 to the additional light distribution pattern PAS1 through the additional light distribution patterns PAS11, PAS12 and PAS13 in which no left light distribution pattern PAL is formed.

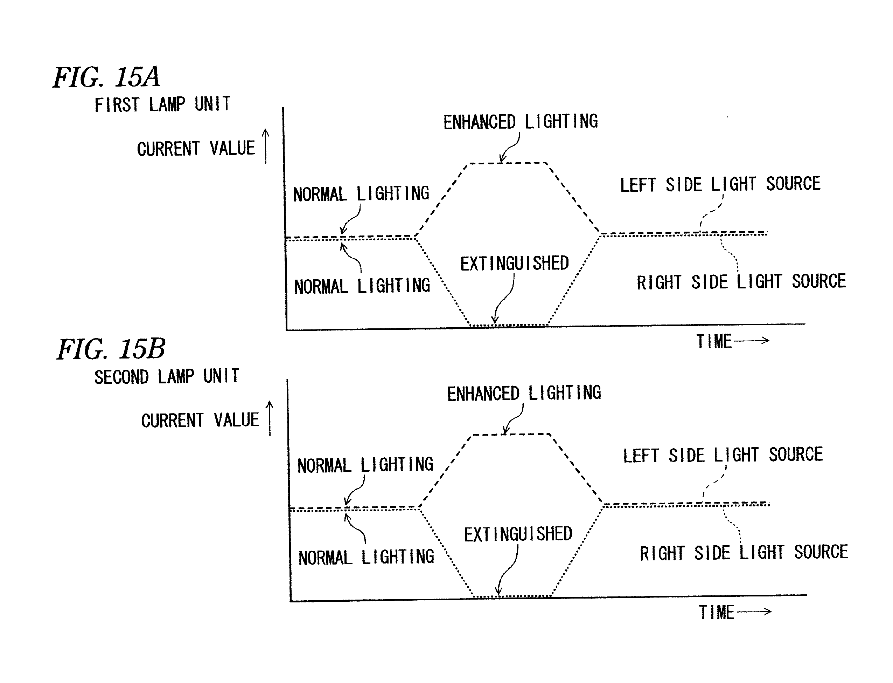

FIG. 15A is a timing chart illustrating a state of current control carried out on the light sources 24Ra and 24La of the first lamp unit 20F by the controller 50 in order to change the additional light distribution pattern, formed by light emitted from the first lamp unit 20F, in the course of the transition illustrated in FIGS. 14A to 14E. Furthermore, FIG. 15B is a timing chart illustrating a state of current control carried out similarly on the light sources 24Ra and 24La of the second lamp unit 20S.

As illustrated in FIG. 15A, for the first lamp unit 20F, the left light source 24La is extinguished in the state in which the movable shade 28 is located at the light blocking release position, and the actuator 30 is subsequently driven to move the movable shade 28 from the light blocking release position to the first light blocking position; then, the left light source 24La is lit. Meanwhile, the amount of light from the right light source 24Ra is increased by about 20% to about 100% (e.g., by about 80%) during the period in which the left light source 24La is extinguished.

On the other hand, as illustrated in FIG. 15B, for the second lamp unit 20S, the right light source 24Ra is extinguished in the state in which the movable shade 28 is located at the light blocking release position, and the actuator 30 is subsequently driven to move the movable shade 28 from the light blocking release position to the first light blocking position; then, the right light source 24Ra is lit. Meanwhile, the amount of light from the left light source 24La is increased by about 20% to about 100% (e.g., by about 80%) during the period in which the right light source 24Ra is extinguished.

Also when a transition is made from the additional light distribution pattern PA0 to the additional light distribution pattern PA1, the additional light distribution pattern formed by light emitted from the lamp main body 12 is a light distribution pattern provided by superposition of: the additional light distribution pattern PAF11, PAF12 or PAF13 formed by light emitted from the first lamp unit 20F; and the additional light distribution pattern PAS11, PAS12 or PAS13 formed by light emitted from the second lamp unit 20S. In this case, in the additional light distribution patterns PAF11, PAF12 and PAF13, no right light distribution pattern PAR is formed but the left light distribution pattern PAL is brightened; on the other hand, in the additional light distribution patterns PAS11, PAS12 and PAS13, no left light distribution pattern PAL is formed but the right light distribution pattern PAR is brightened. Hence, the additional light distribution pattern, provided by superposition of the additional light distribution pattern PAF 11, PAF12 or PAF13 and the additional light distribution pattern PAS11, PAS12 or PAS13, has brightness close to that of the additional light distribution pattern PA0 or PA1.

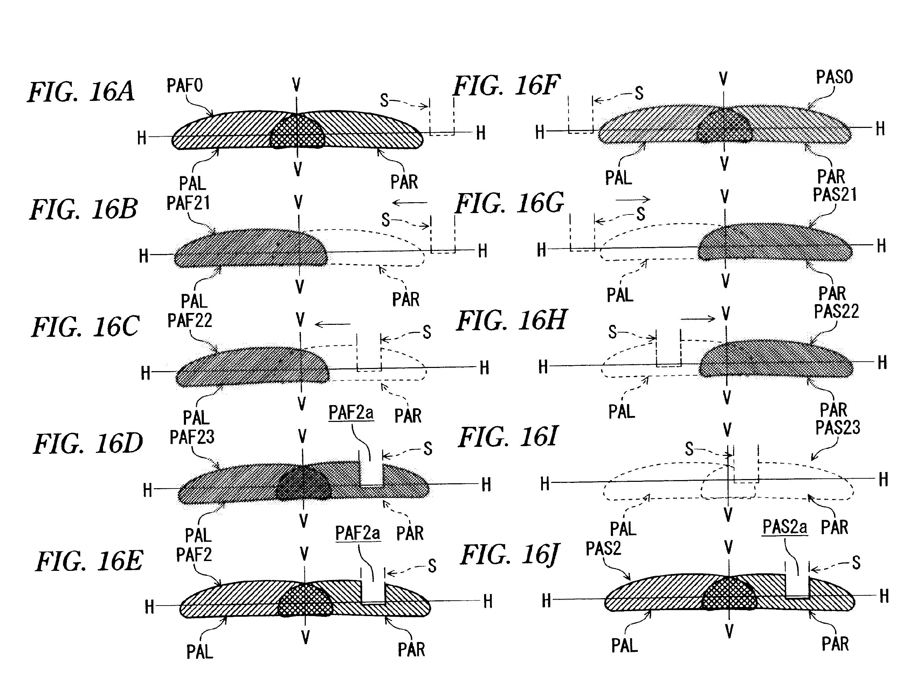

FIGS. 16A to 16J are diagrams similar to FIGS. 14A to 14J. But FIGS. 16A to 16E illustrate additional light distribution patterns PAF0, PAF21, PAF22, PAF23 and PAF2, respectively, in the course of transition made from the additional light distribution pattern PAF0 included in the high beam light distribution pattern PH0 illustrated in FIG. 12A to the additional light distribution pattern PAF2 included in the high beam light distribution pattern PH2 illustrated in FIG. 13A, while FIGS. 16F to 16J illustrate additional light distribution patterns PAS0, PAS21, PAS22, PAS23 and PAS2, respectively, in the course of transition made from the additional light distribution pattern PAS0 included in the high beam light distribution pattern PH0 illustrated in FIG. 12A to the additional light distribution pattern PAS2 included in the high beam light distribution pattern PH2 illustrated in FIG. 13A.

In this case, a moving distance of the movable shade 28 of the first lamp unit 20F from the light blocking release position to the light blocking position is short, but a moving distance of the movable shade 28 of the second lamp unit 20S from the light blocking release position to the light blocking position is long.

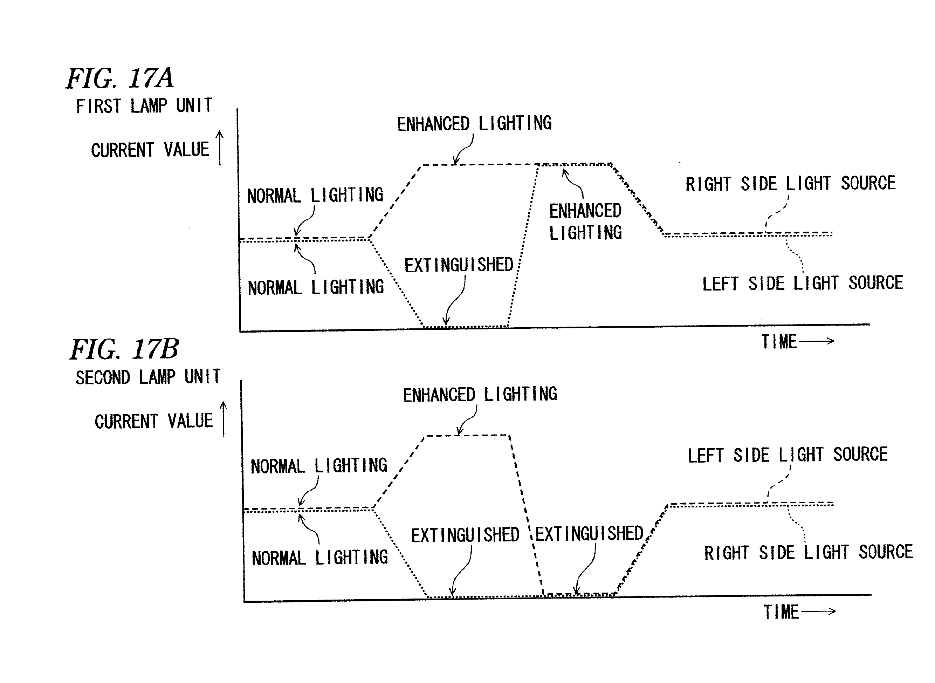

FIG. 17A is a timing chart illustrating a state of current control carried out on the pair of right and left light sources 24Ra and 24La of the first lamp unit 20F by the controller 50 in order to change the additional light distribution pattern, formed by light emitted from the first lamp unit 20F, in the course of the transition illustrated in FIGS. 16A to 16E. Furthermore, FIG. 17B is a timing chart illustrating a state of current control carried out similarly on the light sources 24Ra and 24La of the second lamp unit 20S.

As illustrated in FIG. 17A, for the first lamp unit 20F, the left light source 24La is extinguished in the state in which the movable shade 28 is located at the light blocking release position, and the actuator 30 is subsequently driven to move the movable shade 28 from the light blocking release position to the second light blocking position. Then, the left light source 24La is lit in an enhanced mode for a given period of time, and the lighting mode of the left light source 24La is thereafter returned to normal lighting. Meanwhile, the right light source 24Ra is lit in the enhanced mode during the period in which the left light source 24La is extinguished and the period in which the left light source 24La is lit in the enhanced mode, and then the lighting mode of the right light source 24Ra is returned to normal lighting. In this case, when the right light source 24Ra is lit in the enhanced mode, the amount of light therefrom is increased by about 20% to about 100% (e.g., by about 80%) with respect to the amount of light from the right light source 24Ra in the normal lighting.

On the other hand, as illustrated in FIG. 17B, for the second lamp unit 20S, the right light source 24Ra is extinguished in the state in which the movable shade 28 is located at the light blocking release position, and the actuator 30 is subsequently driven to move the movable shade 28 from the light blocking release position to the second light blocking position. Then, the right light source 24Ra is kept in an extinguished state until the movable shade 28 reaches the second light blocking position. Meanwhile, the left light source 24La is lit in the enhanced mode simultaneously with the extinguishing of the right light source 24Ra, and is subsequently extinguished upon arrival of the movable shade 28 at a position near the optical axis Ax. Then, after the arrival of the movable shade 28 at the second light blocking position, the lighting modes of both of the right light source 24Ra and the left light source 24La are returned to normal lighting. In this case, the amount of light at the time of lighting in the enhanced mode is increased by about 20% to about 100% (e.g., by about 80%) with respect to the amount of light in the normal lighting.

In such a case, the lighting of the left light source 24La of the first lamp unit 20F in the enhanced mode is started simultaneously with the extinguishing of the left light source 24La of the second lamp unit 20S, and is ended simultaneously with the returning of the left light source 24La to normal lighting.

When transitions are made from the additional light distribution patterns PAF0 and PAS0 to the additional light distribution patterns PAF2 and PAS2, respectively, no right light distribution pattern PAR is formed in the additional light distribution patterns PAF21 and PAF22, and no left light distribution pattern PAL is formed in the additional light distribution patterns PAS21 and PAS22; on the other hand, the left light distribution pattern PAL in the additional light distribution patterns PAF21 and PAF22 is brightened, and the right light distribution pattern PAR in the additional light distribution patterns PAS21 and PAS22 is brightened. Hence, the shadow S of the movable shade 28, which is being moved, will not be formed in the additional light distribution pattern provided by superposition of the additional light distribution patterns PAF22 and PAS22, and the brightness thereof will be kept at a level close to that of the brightness of the additional light distribution pattern PA0.

Further, when the transitions are made from the additional light distribution patterns PAF0 and PAS0 to the additional light distribution patterns PAF2 and PAS2, respectively, no right and left light distribution patterns PAR and PAL are formed in the additional light distribution pattern PAS23, but the bright right and left light distribution patterns PAR and PAL are formed in the additional light distribution pattern PAF23. Hence, the shadow S of the movable shade 28, which is being moved, will not be formed in the additional light distribution pattern provided by superposition of the additional light distribution patterns PAF23 and PAS23, and the brightness thereof will be kept at a level close to that of the brightness of the additional light distribution pattern PA2.

In the high beam light distribution pattern PH3 illustrated in FIG. 13B, the cut-out portion PA3a is formed at a position opposite to that of the cut-out portion PA2a of the high beam light distribution pattern PH2, illustrated in FIG. 13A, with respect to the line V-V. Hence, a transition from the high beam light distribution pattern PH0 to the high beam light distribution pattern PH3 is made by carrying out control on the movable shade 28 and light sources 24Ra and 24La of each of the first and second lamp units 20F and 20S in directions opposite to those of the control for the transition made to the high beam light distribution pattern PH2.

Next, effects of the second embodiment will be described.

The vehicle lamp 10 according to the present embodiment includes the first and second lamp units 20F and 20S for forming the additional light distribution pattern PA0 as a variable light distribution pattern for a high beam, and a projector type lamp unit including the movable shade 28 is adopted for each of the first and second lamp units 20F and 20S. Furthermore, the vehicle lamp 10 is formed so that when a particular object present in front of the vehicle during running of the vehicle is detected by the camera 52 serving as a detector, the controller 50 serving as a light distribution pattern controller laterally moves the movable shade 28 from the light blocking release position to the light blocking position at which light for forming a given region of the additional light distribution pattern PA0 is blocked, thus making it possible to obtain the following effects.

Specifically, the position of the given region (i.e., the position of the cut-out portion PA1a of the additional light distribution pattern PA1) is moved laterally in accordance with that of the preceding vehicle 2, the oncoming vehicle 4 or the pedestrian 6, thus making it possible to improve forward visibility for the driver of the vehicle, equipped with the vehicle lamp 10, without giving glare to the driver of the preceding vehicle 2 or oncoming vehicle 4 or the pedestrian 6. In addition, the present embodiment is capable of implementing this feature without any need for swiveling of each of the lamp units 20F and 20S.

Further, the vehicle lamp 10 according to the present embodiment is formed so that the first and second lamp units 20F and 20S are each provided with two sets of the light sources and reflectors, i.e., the light source 24Ra and the reflector 26R on the right side of the optical axis Ax and the light source 24La and the reflector 26L on the left side of the optical axis Ax. Further, the light blocking release position of the movable shade 28 of the first lamp unit 20F is set on the left side of the optical axis Ax; on the other hand, the light blocking release position of the movable shade 28 of the second lamp unit 20S is set on the right side of the optical axis Ax. Furthermore, the controller 50 is configured so as to drive the actuator 30 of each of the lamp units 20F and 20S and move the movable shade 28 thereof from the light blocking release position to the light blocking position upon detection of an object during running of the vehicle. In addition, when the movable shade 28 of the first lamp unit 20F is moved from the light blocking release position to the light blocking position, the controller 50 extinguishes the left light source 24La while the movable shade 28 is moved in a section between the light blocking release position and a position near the optical axis Ax; on the other hand, when the movable shade 28 of the second lamp unit 20S is moved from the light blocking release position to the light blocking position, the controller 50 extinguishes the right light source 24Ra while the movable shade 28 is moved in a section between the light blocking release position and a position near the optical axis Ax. Thus, the following effects are obtainable.

Specifically, the vehicle lamp 10 forms the additional light distribution pattern PA0 as a light distribution pattern provided by a combination of the pair of additional light distribution patterns PAF0 and PAS0 formed by light emitted from the first and second lamp units 20F and 20S.

In this case, the additional light distribution pattern PAF0 formed by light from the first lamp unit 20F will be formed as a light distribution pattern provided by a combination of the pair of right and left light distribution patterns PAR and PAL formed by light from the two sets of the light sources 24Ra and 24La and reflectors 26R and 26L. However, when the movable shade 28 is moved rightward from the light blocking release position to the light blocking position, the left light source 24La is extinguished while the movable shade 28 is moved in a section between the light blocking release position and a position near the optical axis Ax, thus preventing the right light distribution pattern PAR from being formed. Hence, in the additional light distribution patterns PAF11, PAF12 and PAF13, formation of a dark region moving leftward from a right end portion thereof can be prevented. As a result, the possibility that an uncomfortable feeling might be given to the driver of the vehicle equipped with the vehicle lamp 10 can be eliminated.

On the other hand, the additional light distribution pattern PAS0 formed by light emitted from the second lamp unit 20S will be formed as a light distribution pattern provided by a combination of the pair of right and left light distribution patterns PAR and PAL formed by light from the two sets of the light sources 24Ra and 24La and reflectors 26R and 26L. However, when the movable shade 28 is moved leftward from the light blocking release position to the light blocking position, the right light source 24Ra is extinguished while the movable shade 28 is moved in a section between the light blocking release position and a position near the optical axis Ax, thus preventing the left light distribution pattern PAL from being formed. Hence, in each of the additional light distribution patterns PAS11, PAS12 and PAS13, formation of a dark region moving rightward from a left end portion thereof can be prevented. As a result, the possibility that an uncomfortable feeling might be given to the driver of the vehicle equipped with the vehicle lamp 10 can be eliminated.

Moreover, in the present embodiment, when no right light distribution pattern PAR is formed in the additional light distribution pattern PAF0 formed by light emitted from the first lamp unit 20F, the right light distribution pattern PAR is formed in the additional light distribution pattern PAS0 formed by light emitted from the second lamp unit 20S; furthermore, when no left light distribution pattern PAL is formed in the additional light distribution pattern PAS0 formed by light emitted from the second lamp unit 20S, the left light distribution pattern PAL is formed in the additional light distribution pattern PAF0 formed by light emitted from the first lamp unit 20F. Hence, the vehicle lamp 10 is capable of forming, as the whole lamp, an entire shape of the additional light distribution pattern even during the movement of the movable shade 28 of each of the lamp units 20F and 20S.

As described above, the vehicle lamp 10 configured to emit the additional light distribution pattern PA0 as a variable light distribution pattern for a high beam is capable of forming, with a simple lamp structure, the additional light distribution pattern which can improve forward visibility for the driver of the vehicle, equipped with the vehicle lamp 10, without giving glare to the driver of the preceding vehicle 2 or oncoming vehicle 4, for example, in such a manner that prevents an uncomfortable feeling from being given to the driver of the vehicle equipped with the vehicle lamp 10.

Further, in the present embodiment, when the light blocking position of the movable shade 28 of the lamp unit 20F (20S) is located opposite to the light blocking release position thereof with respect to the optical axis Ax in moving the movable shade 28 of the lamp unit 20F (20S) from the light blocking release position to the light blocking position, the controller 50 also extinguishes the other light source 24Ra (or 24La) of the lamp unit 20F (or 20S) while the movable shade 28 moves in a section beyond the optical axis Ax. Hence, even when the light blocking position is set at a position located laterally away from the optical axis Ax, a moving dark region can be prevented from being formed in the variable light distribution patterns PAF21, PAF22 and PAF23 (or PAS21, PAS22 and PAS23).

Besides, in the present embodiment, when the movable shade 28 of the lamp unit 20F (or 20S) is moved from the light blocking release position to the light blocking position, the controller 50 increases the amount of light from the other light source 24La (or 24Ra) of the other lamp unit 20S (or 20F), which is equivalent to the extinguished light source 24La (or 24Ra) of the lamp unit 20F (or 20S), thus making it possible to obtain the following effects.

Specifically, while one of the light sources, i.e., the light source 24La (or 24Ra), is extinguished in the lamp unit 20F (or 20S), the additional light distribution pattern formed by light emitted from the lamp unit 20F (or 20S) will be reduced in brightness by that of the light distribution pattern on one side, i.e., the light distribution pattern PAR (or PAL). To cope with this, the amount of light from the light source 24La (or 24Ra) of one of the lamp units, i.e., the lamp unit 20S (or 20F), equivalent to the extinguished light source 24La (or 24Ra) of the other lamp unit 20F (or 20S), is increased, thereby allowing, as the whole lamp, the brightness of the variable light distribution pattern to be maintained at a level close to that of the brightness of the normal variable light distribution pattern.

Furthermore, while both of the light sources 24Ra and 24La are extinguished in the lamp unit 20F (or 20S), the additional light distribution pattern formed by light emitted from the lamp unit 20F (or 20S) will not be formed at all, but the amount of light from both of the light sources 24Ra and 24La of the other lamp unit 20S (or 20F) is increased, thereby allowing, the brightness of the variable light distribution pattern as a whole to be maintained at a level close to that of the brightness of the normal variable light distribution pattern. In addition, the above-described enhancing control is carried out, thus making it possible to further eliminate the possibility that an uncomfortable feeling might be given to the driver of the vehicle equipped with the vehicle lamp 10.

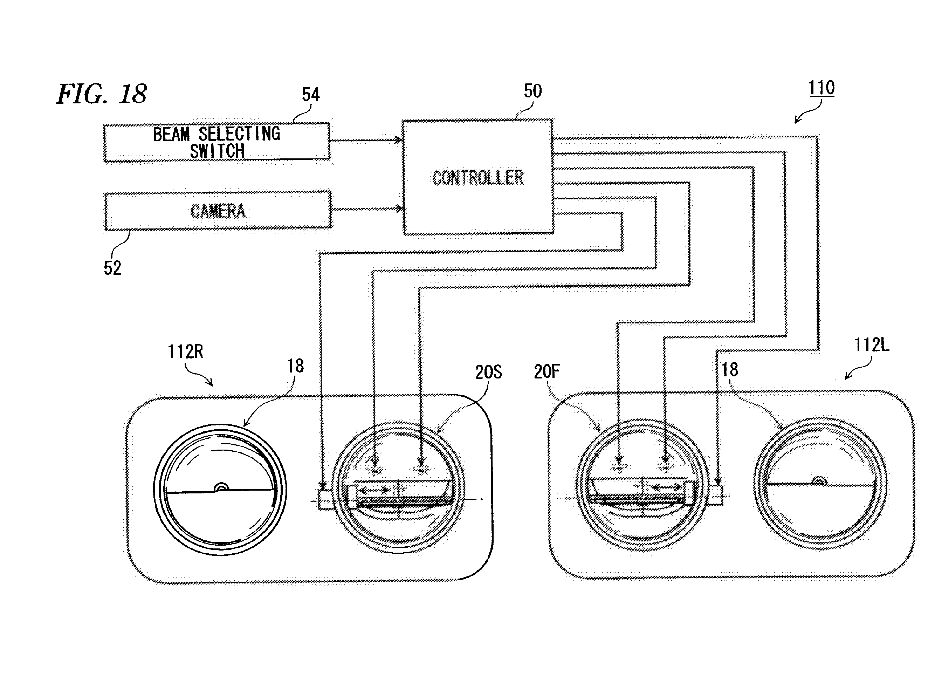

The foregoing embodiment has been described on the assumption that the first and second lamp units 20F and 20S serve as constituent elements of the single lamp main body 12. Alternatively, as in the case of a vehicle lamp 110 illustrated in FIG. 18, one of a pair of right and left lamp main bodies 112R and 112L, i.e., the lamp main body 112L (or 112R), may be provided with the first lamp unit 20F, and the other lamp unit 112R (or 112L) may be provided with the second lamp unit 20S.

Also when such a structure is adopted, effects similar to those of the foregoing embodiment are obtainable.

The foregoing embodiment and the modified example thereof have been described on the assumption that the pair of right and left light sources 24Ra and 24La of each of the lamp units 20F and 20S are light emitting chips of the white light emitting diodes 24R and 24L, but effects similar to those of the foregoing embodiment and the modified example are obtainable also when a light emitting part or the like of a discharge bulb is used as a light source.

In the foregoing embodiment and the modified example thereof, the lamp unit 18 of each of the vehicle lamps 10 and 110 is configured to emit a left low beam light distribution pattern as the low beam light distribution pattern PL. However, also when the lamp unit 18 is configured to emit a right low beam light distribution pattern, effects similar to those of the foregoing embodiment and the modified example are obtainable by adopting structures similar to those described in the foregoing embodiment and the modified example.

## Claims

1. A vehicle lamp (10) configured to emit a variable light distribution pattern (PA0, PA1...) for a high beam, the vehicle lamp comprising:
a lamp unit (20) configured to form the variable light distribution pattern, the lamp unit comprising:
a projection lens (22) disposed on an optical axis (Ax) extending in a longitudinal direction of a vehicle;
a pair of light sources (24La, 24Ra) configured to emit light, wherein the light sources are disposed behind a rear focal point of the projection lens and wherein one of the light sources is a left-side light source (24La) which is disposed on a left side of the optical axis, and the other light source is a right-side light source (24Ra) which is disposed on a right side of the optical axis;
a pair of reflectors (26L, 26R) arranged on both sides of the optical axis to reflect light emitted from the light sources toward the projection lens;
a movable shade (28) disposed between the reflectors and the projection lens; and
an actuator (30) configured to move the movable shade between a first position and a second position, wherein: the light forming a given region of the variable light distribution pattern is blocked by the movable shade when the movable shade is in the first position; and the light reflected from the reflectors is not blocked when the movable shade is in the second position;
a detector (52) configured to detect an object in front of the vehicle;
a drive controller (50) configured to control the actuator such that the actuator moves the movable shade between the first and second positions, when the detector detects the object in front of the vehicle while the vehicle is running;
a light amount controller (50) configured to control an amount of the light emitted from the light sources, wherein the light amount controller decreases an amount of light emitted from the left-side light source (24La) when the movable shade is moved from the second position, which is on a left side of the optical axis, to the first position, and the light amount controller decreases an amount of light emitted from the right-side light source (24Ra) when the movable shade is moved from the second position, which is on a right side of the optical axis, to the first position.

2. The vehicle lamp according to claim **1**,
wherein the light amount controller increases the amount of light emitted from the right-side light source when the movable shade is moved from the second position, which is on a left side of the optical axis, to the first position, and
wherein the light amount controller increases the amount of light emitted from the left-side light source when the movable shade is moved from the second position, which is on a left side of the optical axis, to the first position.

3. A vehicle lamp (10) configured to emit a variable light distribution pattern (PA0, PA1...) for a high beam, the vehicle lamp comprising:
first and second lamp units (20S, 20F) configured to form the variable light distribution pattern, each of the first and second lamp units comprising:
a projection lens (22) disposed on an optical axis (Ax) extending in a longitudinal direction of a vehicle;
a pair of light sources (24La, 24Ra) configured to emit light, wherein the light sources are disposed behind a rear focal point of the projection lens and wherein one of the light sources is a left-side light source (24La) which is disposed on a left side of the optical axis, and the other light source is a right-side light source (24Ra) which is disposed on a right side of the optical axis;
a pair of reflectors (26L, 26R) arranged on both sides of the optical axis to reflect light emitted from the light sources toward the projection lens;
a movable shade (28) disposed between the reflectors and the projection lens; and
an actuator (30) configured to move the movable shade between a first position and a second position, wherein: the light forming a given region of the variable light distribution pattern is blocked by the movable shade when the movable shade is in the first position; and the light reflected from the reflectors is not blocked when the movable shade is in the second position;
a detector (52) formed to detect an object in front of the vehicle;
a light distribution pattern controller (50) configured to control a light distribution of light emitted from the first and second lamp units, and
wherein the second position of the movable shade of the first lamp unit is located on a left side of the optical axis of the first lamp unit, while the second position of the movable shade of the second lamp unit is located on a right side of the optical axis of the second lamp unit,
wherein the light distribution pattern controller is configured to control the actuator of each of the first and second lamp units such that the actuator moves the movable shade between the second position and the first position, when the detector detects the object in front of the vehicle while the vehicle is running, and
wherein
the light distribution pattern controller turns off the left side light source of the first lamp unit when the movable shade of the first lamp unit is moved from the second position to the first position, and
the light distribution pattern controller turns off the right side light source of the second lamp unit when the movable shade of the second lamp unit is moved from the second position to the first position.

4. The vehicle lamp according to claim **3**,
wherein the light distribution pattern controller turns off the right side light source of the first lamp unit while the movable shade moves from the optical axis to the first position, when the first position of the movable shade of the first lamp unit is located on a right side of the optical axis of the first lamp unit, and
wherein the light distribution pattern controller turns off the left side light source of the second lamp unit while the movable shade moves from the optical axis to the first position, when the first position of the movable shade of the second lamp unit is located on a left side of the optical axis of the second lamp unit,

5. The vehicle lamp according to claim **3**, wherein
the light distribution pattern controller increases an amount of light emitted from the right side light source of the first lamp unit when the movable shade of the first lamp unit is moved from the second position to the first position, and
the light distribution pattern controller increases an amount of light emitted from the left side light source of the second lamp unit when the movable shade of the second lamp unit is moved from the second position to the first position
